(19) Europäisches Patentamt
European Patent Office
Office européen des brevets

(11) EP 0 379 296 B1

(12) EUROPEAN PATENT SPECIFICATION

(45) Date of publication and mention of the grant of the patent:
**08.05.1996 Bulletin 1996/19**

(51) Int Cl.$^6$: **G10L 9/14**

(21) Application number: **90300255.8**

(22) Date of filing: **10.01.1990**

# (54) A low-delay code-excited linear predictive coder for speech or audio

Linearer Prädiktivkodierer mit Code-Anregung für Sprach- oder Audiosignale mit niedriger Verzögerung

Codeur à prédiction linéaire excité par codes pour signaux de paroles ou à basse fréquence fonctionnant avec un faible retard

(84) Designated Contracting States:
**DE ES FR GB IT NL**

(30) Priority: **17.01.1989 US 298451**

(43) Date of publication of application:
**25.07.1990 Bulletin 1990/30**

(73) Proprietor: **AT&T Corp.**
**New York, NY 10013-2412 (US)**

(72) Inventor: **Chen, Juin-Hwey**
**Mountainside, New Jersey 07092 (US)**

(74) Representative:
**Watts, Christopher Malcolm Kelway, Dr. et al**
**AT&T (UK) LTD.**
**AT&T Intellectual Property Division**
**5 Mornington Road**
**Woodford Green Essex IG8 OTU (GB)**

(56) References cited:
- **ICASSP '86 (IEEE-IECEJ-ASJ INTERNATIONAL CONFERENCE ON ACOUSTICS, SPEECH, AND SIGNAL PROCESSING), Tokyo, 7th - 11th April 1986, vol. 3, pages 1693-1696, IEEE, New York, US; J.-H. CHEN et al.: "Vector adaptive predictive coding of speech at 9.6 kb/s"**
- **GLOBECOM '89 (IEEE GLOBAL TELECOMMUNICATIONS CONFERENCE AND EXHIBITION), Dallas, Texas, 27th - 30th November 1989, vol. 2, pages 1237-1241, IEEE, New York, US; J.-H. CHEN: "A robust low-delay CELP speech coder at 16 kbit/s"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 379 296 B1

**Description**

## Technical Field

This invention relates to digital communication, and more particular to digital coding or compression of speech or audio signals when the communication system requires a low coding delay and high fidelity achieved at medium to low bit-rates.

## Background of the Invention

In the past, toll-quality speech used to be obtainable only by high-bit-rate coders such as 64 kb/s log PCM or 32 kb/s ADPCM. More recently, several coding techniques can achieve toll-quality or "almost toll-quality" speech at 16 kb/s. These techniques include Code-Excited Linear Prediction (CELP), implementing the concepts of the article by M. R. Schroeder et al, "Code-Excited Linear Prediction (CELP): high quality speech at very low bit rates," Proc. IEEE Int. Conf. Acoust., Speech, Signal Processing, pp. 937-940 (1985); Multi-Pulse LPC (MPLPC), as disclosed in U.S. Patent No. Re 32,580, issued January 19, 1988; Adaptive Predictive Coding (APC), as described in the articles by B. S. Atal, "Predictive coding of speech at low bit rates," IEEE Trans. Communications COM-30(4) pp. 600-614 (April 1982); and systems described by R. Zelinski and P. Noll, "Adaptive transform coding of speech signals," IEEE Trans. Acoust., Speech, Signal Processing ASSP-25 pp. 299-309 (1977); and F. K. Soong et al., "A high quality subband speech coder with backward adaptive predictor and optimal time-frequency bit assignment," Proc. IEEE Int. Conf. Acoustics Speech Signal Processing pp. 2387-2390 (1986).

However, all these coding techniques require a large coding delay — typically in the range of 40 to 60 ms — to achieve high-quality speech. While a large coding delay is necessary for these coders to buffer enough speech and to exploit the redundancy in the buffered speech waveform, the delay is unacceptable in many speech coding applications. Achieving high-quality speech at 16 kb/s with a coding delay less than 1 or 2 ms is still a major challenge to speech researchers.

After the CCITT (an international standards body) standardization of 32 kb/s ADPCM in 1984, there is currently an increasing need for a 16 kb/s standard. Some localized 16 kb/s speech coding standards now already exist for specific applications. To avoid proliferation of different 16 kb/s standards and the potential difficulty of interworking between different standards, in June 1988 the CCITT decided to investigate the possibility of establishing a single 16 kb/s speech coding standard for universal applications by mid 1991. If proved feasible, this standard will be used in all kinds of applications such as videophone, cordless telephone, Public Switched Telephone Network (PSTN), ISDN, voice messaging, and digital mobile radio, etc.

Because of the variety of applications this standard has to serve, the CCITT has determined a stringent set of performance requirements and objectives for the candidate coders. Basically, the major requirement is that the speech quality produced by this 16 kb/s standard should be essentially as good as that of the CCITT 32 kb/s ADPCM standard for the following four conditions: (1) single stage of coding, (2) three asynchronous stages of tandem coding, (3) random bit errors at a bit error rate (BER) $\leq 10^{-3}$, and (4) random bit errors at a BER $\leq 10^{-2}$. Furthermore, the requirement for one-way encoder/decoder delay is $\leq$ 5 ms, and the objective is $\leq$ 2 ms. Such short coding delays make it very difficult to achieve the speech quality requirement.

Because of this low-delay requirement, none of the 16 kb/s coders mentioned above can be used in their current form, although some of them may have the potential to achieve the speech quality requirement. With all these well-established coders ruled out, a new approach is needed.

In the literature, several researchers have reported their work on low-delay coding at 16 kb/s. Jayant and Ramamoorthy (see U.S. Patents Nos. 4,617,676 and 4,726,037), used an adaptive postfilter to enhance 16 kb/s ADPCM speech and achieved a mean opinion score (MOS) of 3.5 at nearly zero coding delay. R. V. Cox, S. L. Gay, Y. Shoham, S. R. Quackenbush, N. Seshadri, and N. S. Jayant, "New directions in subband coding," IEEE J. Selected Areas Comm. 6(2) pp. 391-409 (February 1988), combined subband coding and vector quantization (VQ) and achieved an MOS of roughly 3.5-3.7 (perhaps 0.2 more with postfiltering) at a coding delay of 15 ms. Berouti et al. "Reducing signal delay in multipulse coding at 16 kb/s," IEEE Int. Conf. Acoust., Speech, Signal Processing, pp. 3043-3046 (1986), reduced the coding delay of an MPLPC coder to 2 ms by reducing the frame size to 1 ms; however, the speech quality was equivalent to 5.5-bit log PCM — a significant degradation. Taniguchi et al., "A 16 kbps ADPCM with multi-quantizer (ADPCM-MQ) coder and its implementation by digital signal processor," Proc. IEEE Int. Conf. Acoust., Speech, Signal Processing, pp. 1340-1343 (1987) developed an ADPCM coder with multi-quantizers where the best quantizer was selected once every 2.5 ms. The coding delay of their real-time prototype coder was 8.3 ms. This coder produced speech quality "nearly equivalent to a 7-bit μ-law PCM", but this was achieved with the help of postfiltering and with a non-standard 6.4 kHz sampling rate and a resulting non-standard bandwidth of the speech signal. J. D. Gibson and G. B. Haschke, "Backward adaptive tree coding of speech at 16 kbps," Proc. IEEE Int. Conf. Acoust, Speech, Signal

Processing, pp. 251-254 (April 1988) and M. W. Marcellin, T. R. Fischer, and J. D. Gibson, "Predictive trellis coded quantization of speech," Proc. IEEE Int. Conf. Acoust., Speech, Signal Processing, pp. 247-250 (April 1988), studied backward-adaptive predictive tree coders and predictive trellis coders which should have low delay. Unfortunately, they did not report the exact coding delay and the subjective speech quality. L. Watts and V. Cuperman, "A vector ADPCM analysis-by-synthesis configuration for 16 kbit/s speech coding," Proc. IEEE Global Communication Conf., pp. 275-279 (December 1988), developed a vector ADPCM coder with 1 ms delay. However, they did not comment on the subjective speech quality, either.

V. Iyengar and P. Kabal, "A low delay 16 kbits/sec speech coder," Proc. IEEE Int. Conf. Acoust., Speech, Signal Processing, pp. 243-246 (April 1988), have also developed a backward-adaptive predictive tree coder with 1 ms coding delay. This coder can be regarded as a "backward-adaptive APC" coder with 8-deep tree coding for the prediction residual. Formal subjective testing indicated that the speech quality of this coder was equivalent to 7-bit log PCM, which typically has an MOS of around 4.0. An adaptive postfilter, per J.-H. Chen and A. Gersho, "Real-time vector APC speech coding at 4800 bps with adaptive postfiltering," Proc. IEEE Int. Conf. Acoust., Speech, Signal Processing, pp. 2185-2188 (1987), was later added to this coder to further improve the speech quality.

Work has been done in Japan to reduce the typical 40 ms or more coding delay of CELP coders. See the articles by T. Taniguchi, K. Iseda, S. Unagami, and F. Amano, "A Study of Code Excited LPC with Gradient Method," (in Japanese) IECE Nat'l Convention Rec., No. 184 (September 1986), and T. Taniguchi, K. Okazaki, F. Amano, and S. Unagami, "4.8 kbps CELP coding with backward prediction," (in Japanese) IEICE Nat'l Convention Rec., No. 1346 (March 1987). However, their work was concentrated on 4.8 and 8 kb/s coding, and the expected coding delay was around 15 ms — too high for the CCITT 16 kb/s standard. Similar to the ADPCM-MQ coder cited above, they also used a non-standard 6.4 kHz sampling frequency.

In the CCITT 32 kb/s ADPCM coding standard, low delay is achieved with sample-by-sample (or "scalar") adaptive quantization and adaptive prediction. The adaptive quantizer is based on a gain adaptation algorithm that is backward adaptive and is resistant (or "robust") to channel errors. This adaptive scalar quantizer was first proposed by N.S. Jayant, "Adaptive quantization with a one word memory," Bell Syst. Tech. J., 52, pp. 1119-1144 (September 1973), and D.J. Goodman and R.M. Wilkinson, "A robust adaptive quantizer," IEEE Trans. Communs., pp. 1362-1365 (November 1975). More recently, this adaptive scalar quantizer has been generalized to the multi-dimensional (or "vector") case by J.-H. Chen and A. Gersho, "Gain-adaptive vector quantization with application to speech coding," IEEE Trans. Commun., pp.918-930 (September 1987). Due to the theoretical superiority of vector quantization (VQ) over scalar quantization, this robust gain-adaptive vector quantizer offers significant performance improvement over its scalar counterpart. However, if used alone, such a gain-adaptive vector quantizer is not sufficient to provide high-quality speech at 16 kb/s, although it can be used as a building block of a low-delay vector coding system.

In summary, from the literature, it does not appear that the CCITT performance requirements for the 16 kb/s standard can be achieved by existing speech coders. A new speech coder needs to be developed in order to achieve high-quality 16 kb/s speech at low coding delay.

## Summary of the Invention

A method according to the invention is set out in claim 1.

I have recognized that the above-described CCITT performance requirements can be achieved by a CELP-type coder which is more effectively backward adaptive to achieve low delay.

Low delay is achieved by selectively applying the principle of backward adaptation in both the encoder and the decoder.

More specifically, excellent perceived speech quality at low bit rates is achieved with low delay by employing the principle of the code-excited linear predictive coder, with the exception that the predictor coefficients are not transmitted from the encoder to the decoder, but, instead, are derived locally at both the encoder and the decoder from previously quantized speech. Due to this purely backward adaptation, there is no need to buffer a large speech frame of 20 ms or so, and therefore the coding delay is significantly reduced.

The synthesis filter coefficients are not obtained by a gradient method (as in Taniguchi's backward-adaptive CELP, Watts and Cuperman's Vector ADPCM, or Iyengar and Kabal's backward-adaptive APC), but, instead, are derived by performing linear predictive analysis (sometimes referred to as "LPC analysis") on a block of previously quantized speech.

The excitation signal is quantized by a backward gain-adaptive vector quantizer which adapts the excitation gain based on previously quantized excitation and thus does not need to transmit the gain. This backward gain-adaptive vector quantizer can be equipped with one of several alternative "leaky" gain adaptation algorithms that make the excitation gain resistant (or "robust") to channel errors in such a way that any gain mismatch due to channel errors will eventually decay to zero.

More specifically, an adaptive linear predictor is used to generate the current excitation gain based on the logarithmic values of the gains of previously quantized and gain-scaled excitation vectors. This linear predictor is updated by first performing linear predictive analysis on the said logarithmic values and then modifying the resulting predictor coefficients appropriately to increase error robustness. Alternatively, the excitation gain can also be adapted by a novel implementation of a generalized version of Jayant's robust gain adaptation algorithm mentioned above. Both versions of the gain-adaptive excitation vector quantizer are clearly distinguished from the quantizers used in any of the three coders mentioned above (Taniguchi's, Watts and Cuperman's, and Iyengar and Kabal's).

Since the gain is not transmitted but is derived backward adaptively, more bits are available to code the "shape" of excitation vectors. As a result, compared to conventional CELP coders, shorter excitation vectors can be used by this gain-adaptive vector quantizer without losing the speech quality. The block size used by this vector quantizer is only 4 or 5 samples per vector for 16 kb/s coding. The one-way coding delay, which is typically 2 to 3 times the block size, is therefore only on the order of 1 to 2 ms. This not only surpasses the 5 ms delay requirement of the CCITT 16 kb/s standard but actually meets the objective of 2 ms.

The table of representative code vectors (or "codebook") of this backward gain-adaptive vector quantizer is optimized based on a training speech database, with the effects of the chosen gain adaptation algorithm and backward-adaptive predictor all taken into account. Furthermore, to reduce the effect of channel errors, the codevectors in the optimized codebook are assigned channel indices according to the principle of pseudo-Gray coding, as described by J. R. B. De Marca and N. S. Jayant, "An algorithm for assigning binary indices to the codevectors of a multi-dimensional quantizer," Proc. IEEE Int. Conf. Communications, pp. 1128-1132 (June 1987) or in U. S. Patent No. 4,791,654, issued December 13, 1988, and K. A. Zeger and A. Gersho, "Zero Redundancy channel coding in vector quantization," Electronic Letters 23(12), pp. 654-656 (June 1987).

Advantageously, the LD-CELP coder disclosed in this patent achieves very good perceptual speech quality without the help of postfiltering. While most low-delay 16 kb/s coders mentioned above rely on postfiltering to improve the speech quality, we avoid postfiltering in this invention for the following two reasons. First, the slight speech distortion introduced by postfiltering will accumulate during tandem coding and would result in severely distorted speech. Second, the postfilter inevitably introduces some phase distortion. If the coder with a postfilter were used in a network to transmit a non-voice signal such as the 1200 bps differential phase-shift-keying modem signal, which carries information in its phase, then the postfilter would cause difficulty in the modem receiver.

Although this coder was originally developed for 16 kb/s speech coding, it can also operate at other bit-rates by changing only a few coder parameters. In addition, this coder can also be used to code audio or music signals. For convenience of description, in the following we will use the single word "speech" to refer to speech or other audio signals, depending on whether the coder is used to code speech or audio signals.

## Brief Description of the Drawing

Further features and advantages of this invention will become apparent from the following detailed description, taken together with the drawing, in which:

FIG. 1 (including FIGS. 1A and 1B) is a block-diagrammatic showing of a preferred embodiment of an encoder according to this invention;
FIG. 2 is block-diagrammatic showing of a preferred embodiment of a corresponding decoder according to this invention;
FIG. 3 is a block-diagrammatic showing of the perceptual weighting filter adapter, which appears as a block in FIG. 1;
FIG. 4 is a block-diagrammatic showing of the backward vector gain adapter which appears as a block in FIG. 1 and FIG. 2;
FIG. 5 is a block-diagrammatic showing of the backward synthesis filter adapter which appears as a block in FIG. 1 and FIG. 2;
FIG. 6 is a block-diagrammatic showing of another alternative backward vector gain adapter which can be used in place of FIG. 4;
FIG. 7 is a block-diagrammatic showing of another alternative backward vector gain adapter which is equivalent to FIG. 6;
FIG. 8 is a block-diagrammatic showing of a computationally efficient implementation of the backward vector gain adapter in FIG. 6 and FIG. 7; and
FIG. 9 is a diagram showing the relationship of FIGS. 1A and 1B.

## Detailed Description

The preferred embodiments of the encoder and the decoder according to this invention are shown in FIG. 1 and

FIG. 2, respectively. To make the description easier, in the following we will cite actual values of coder parameters used in our computer simulations. However, it should be emphasized that such a description only refers to a specific coder example according to this invention, and that the invention is in fact much more general in the sense that essentially all coder parameters (e.g., filter orders, vector length, codebook sizes, filter update periods, and leakage factors, etc.) can be freely changed to operate at different bit-rates or to achieve different trade-offs between coder complexity and performance.

To avoid confusion and facilitate comprehension, we will first define some terms and point out some crucial points of the preferred embodiment before we begin to thoroughly describe each block in FIG. 1 and FIG. 2.

The encoder and the decoder respectively encodes and decodes speech block-by-block, rather than sample-by-sample (as in more conventional coders such as ADPCM). Besides the input and output speech, there are several intermediate signals in the encoder and the decoder. Each block of a signal contains several contiguous samples of the signal. Such a group of several contiguous samples is called a "vector". The number of samples in a vector is called the "length" or the "dimension" of the vector. This vector dimension is a design parameter of the coder; once chosen and fixed, it applies to all kinds of signals in the coder. For example, the detailed description below assumes a vector dimension of 5; this implies that 5 contiguous speech samples form a speech vector, 5 excitation samples form an excitation vector, and so on. A signal vector that occurs at the same time as the speech vector to be encoded or decoded presently will be referred to as the "current" vector of that signal.

The excitation Vector Quantization (VQ) codebook index is the only information explicitly transmitted from the encoder to the decoder. This codebook index is determined by a codebook search procedure for every speech vector. Besides this codebook index, there are three pieces of fundamental information that will be periodically updated: (1) the excitation gain, (2) the synthesis filter coefficients, and (3) the perceptual weighting filter coefficients. They are not transmitted, but, instead, are derived in a backward adaptive manner, i.e., they are derived from signals which occur prior to the current signal vector. Among these three pieces of information, the excitation gain is updated once per vector, while the synthesis filter coefficients and the perceptual weighting filter coefficients can be updated either once per vector or once every several vectors. More frequent update results in better performance but higher coder complexity. In the example coder described below, we update these coefficients once every 8 speech vectors (40 samples) in order to achieve lower complexity. For the standard 8 kHz sampling rate used in digital telephony, this corresponds to a 5 ms update period.

The basic operation of the coder can be understood as follows. Conceptually, for each input speech vector the encoder passes each of the 1024 candidate vectors in the codebook (from here on called the "codevectors") through the gain stage 21 and the synthesis filter 22 to obtain the corresponding quantized speech vector. Then, from the resulting 1024 candidate quantized speech vectors the encoder identifies the one that is "closest" to the input speech vector (in a frequency-weighted mean-squared error sense). The codebook index of the corresponding best codevector (which gives rise to that best quantized speech vector) is then transmitted to the decoder. The decoder simply uses the received codebook index to extract the corresponding best codevector and then reproduces that best quantized speech vector.

In practice, however, the conceptual encoder described above has a very high complexity. The preferred embodiment of the encoder shown in FIG. 1 is mathematically equivalent but computationally much more efficient. The detailed description of this preferred embodiment now follows.

In FIG. 1, analog speech first passes through an analog filter 1, which can be a low pass filter or a band pass filter, depending on the application. The signal is then converted into a digital form (discrete waveform samples) by the analog-to-digital (A/D) converter 2. The resulting digital speech signal is used by the perceptual weighting filter adapter 3 in order to determine a set of perceptual weighting filter coefficients. The purpose of the perceptual weighting filter is to dynamically shape the frequency spectrum of the coder's quantizing noise according to the speech spectrum such that the quantizing noise is partially masked by speech and thus becomes less audible to human ears.

It should be noted that each block or module in FIG. 1 through FIG. 8 does not necessarily have to be implemented as a discrete circuit with wires connected to other blocks. Instead, most blocks can easily be implemented by software program modules in a digital signal processor (DSP).

FIG. 3 shows the detailed operation of the perceptual weighting filter adapter 3. Digital speech samples are passed through delay units and are sequentially stored in a buffer 36 (for example, a RAM memory space in a digital signal processor). The linear predictive analysis module 37 then analyzes the buffered speech samples to determine the coefficients of a 10-th order LPC predictor corresponding to the unquantized clean speech at the output of the A/D converter 2. The linear predictive analysis can be done using any of several valid methods, such as the autocorrelation method, the covariance method, or the lattice method, etc. For details of these methods, see the article by J. Makhoul, "linear prediction: a tutorial review," Proc. IEEE, pp. 561-580 (April 1975). The preferred method is the autocorrelation method with a 20 ms Hamming window placed on a frame of speech samples which occurs prior to the current speech vector yet to be coded.

Let the 10-th order LPC predictor derived above be represented by the transfer function

$$Q(z)=\sum_{i=1}^{10} q_i z^{-i} , \qquad (1)$$

where $q_i$'s are the LPC predictor coefficients. The linear predictive analysis module 37 produces $q_i$, i = 1, 2,..., 10 as its output. The weighting filter coefficient calculator 38 then takes these $q_i$'s and calculate the perceptual weighting filter coefficients according to the following equations.

$$W(z)=\frac{1 - Q(z/\gamma_1)}{1 - Q(z/\gamma_2)}, 0<\gamma_2<\gamma_1\leq 1, \qquad (2)$$

$$Q(z/\gamma_1)=\sum_{i=1}^{10} (q_i \gamma_1^i) z^{-i} , \qquad (3)$$

and

$$Q(z/\gamma_2)=\sum_{i=1}^{10} (q_i \gamma_2^i) z^{-i} , \qquad (4)$$

In Eq. (2) above, W(z) is the transfer function of the perceptual weighting filter. The combination of $\gamma_1$ = 0.9 and $\gamma_2$ = 0.4 gives a substantial reduction of the perceived coding noise of the coder.

The perceptual weighting filters 4 and 10 are 10-th order pole-zero filters with numerator coefficients and denominator coefficients defined by Eqs. (2) through (4). These coefficients are updated once every 8 speech vectors and are held constant in between updates. In addition, the updates are "synchronized" with the updates produced by the backward synthesis filter adapter 23. In other words, if the backward synthesis filter adapter 23 produces predictor updates for the 8-th, 16-th, 24-th speech vectors, etc., then the perceptual weighting filter adapter 3 also produces updates of W(z) at those speech vectors.

Let us assume that the sampling rate of the A/D converter 2 is 8 kHz. Then, since a 20 ms Hamming window is used in the linear predictive analysis module 37, the buffer 36 must store at least 160 speech samples, or 32 speech vectors. When the entire coding system is powered up, these 160 samples in the buffer are initialized to zero. In this zero-buffer case, the perceptual weighting filter receives W(z) = 1 by definition. Then, as more and more speech vectors are encoded, these speech vectors are shifted into the buffer sequentially and eventually occupy the entire buffer.

Let s(n) denote the n-th input speech vector. Suppose the perceptual weighting filter adapter 3 is to update W(z) at the k-th speech vector s(k). Then, the linear predictive analysis module 37 will perform the LPC analysis based on the previous 32 speech vectors s(k-32), s(k-31), ..., s(k-1) which are stored in the buffer. After W(z) has been updated, it is held constant for s(k), s(k+1), ..., s(k+7) while these 8 speech vectors are shifted into the buffer one by one. Then, W(z) is updated again at the (k+8)-th speech vector, with the LPC analysis based on the speech vectors s(n-24), s(k-23), ..., s(k+7). Similar procedures are repeated for other speech vectors.

The issue of initialization is now discussed further. When the entire coding system is powered up, not only all speech buffers are initialized to zero, but the internal "memories" (or "states") of all filters and predictors are also initialized to zero (unless otherwise noted). This ensures that both the encoder and the decoder start "at rest" and will not "lock" into any strange operation mode due to backward adaptation.

The encoder and the decoder process speech vector-by-vector. The following description explains how a "current" speech vector is encoded by the encoder in FIG. 1 and then decoded by the decoder in FIG. 2. The same procedure is repeated for every speech vector after the initialization.

Now refer to FIG. 1. The perceptual weighting filter adapter periodically updates the coefficients of W(z) according to Eqs. (2) through (4), and feeds them to the impulse response vector calculator 12 and the perceptual weighting filters 4 and 10.

Let n be the current time index of vectors. The current input speech vector s(n) is passed through the perceptual weighting filter 4, resulting in the weighted speech vector v(n). Note that before feeding the speech vector s(n) to the filter 4, the memory of the filter 4 contains what is left over after filtering the previous speech vector s(n-1), even if the coefficients of the filter 4 is just updated at time n. In other words, after initialization to zero during power up, the memory of the filter 4 should not be reset to zero at any time.

After the weighted speech vector v(n) has been obtained, a "ringing" vector r(n) will be generated next. To do that, we first open the switch 5, i.e., point it to node 6. This implies that the signal going from node 7 to the synthesis filter 9 will be zero. We then let the synthesis filter 9 and the perceptual weighting filter 10 "ring" for 5 samples (1 vector). This means that we continue the filtering operation for 5 samples with a zero signal applied at node 7. The resulting output of the perceptual weighting filter 10 is the desired ringing vector r(n).

Note that for reasons that would be clear from later description, we have to save the memory of the filters 9 and 10 for later use before we start the ringing filtering operation. Also note that except for the vector right after initialization, the memory of the filters 9 and 10 is in general non-zero; therefore, the output vector r(n) is also non-zero in general, even though the filter input from node 7 is zero. In effect, this ringing vector r(n) is the response of the two filters to previous gain-scaled excitation vectors e(n-1), e(n-2),... This vector actually represents the effect due to filter memory up to time (n-1).

The adder 11 then subtracts this ringing vector r(n) from the weighted speech vector v(n) to obtain the "codebook search target vector" x(n). Subtracting the ringing vector r(n) from the weighted speech vector v(n) before performing the codebook search has the advantage of separating the effect of filter memory from the effect of filter excitation. The codebook search then only concentrates on the effect of filter excitation, and this in turn reduces the codebook search complexity.

The way to update the coefficients of the synthesis filters 9 and 22 is now described. These coefficients are updated by the backward synthesis filter adapter 23, which is shown with more detail in FIG. 5. Refer to FIG. 5. This adapter 23 takes the quantized speech as input and produces a set of synthesis filter coefficients as output. Its operation is quite similar to the perceptual weighting filter adapter 3.

The operation of the delay unit and buffer 49 and the linear predictive analysis module 50 is exactly the same as their counter parts (36 and 37) in FIG. 3, except for the following three differences. First, the input signal is now the quantized speech rather than the unquantized input speech. Second, the predictor order is now 50 rather than 10. (If order 50 gives too high a complexity, one can use order 40 to reduce the complexity and achieve essentially the same performance). Third, a white noise correction technique is used with the autocorrelation method of LPC analysis.

The white noise correction technique is a way to reduce the spectral dynamic range so that the normal equation in the LPC analysis is less ill-conditioned. To achieve this, we simply increase the value of the main diagonal of the Toeplitz matrix by 0.01% before solving the normal equation. This in effect "clamps" the spectral dynamic range to about 40 dB. Hence, according to numerical linear algebra theory, in the worst case we only lose about 4 decimal digits of accuracy — not too much harm for the 7-digit accuracy in 32-bit floating-point arithmetic. If a 16-bit fixed-point processor is used to implement this coder, we can increase the main diagonal of the Toeplitz matrix even further. This will give rise to even smaller spectral dynamic range and lower loss of accuracy in the equation solving process. This white noise correction is provided purely as a safety measure. In fact, even without such correction, the spectral dynamic range of the quantized speech is much smaller than that of the unquantized original speech, because the noise floor is raised significantly by the coder's quantization process. If desired, this white noise correction technique can also be used in the perceptual weighting filter adapter 3.

The output of the linear predictive analysis module 50 is the coefficients of a 50-th order LPC predictor corresponding to previously quantized speech. Let $\hat{P}(z)$ be the transfer function of this LPC predictor, then it has the form

$$\hat{P}(z) = \sum_{i=1}^{50} \hat{a}_i z^{-i} , \qquad (5)$$

where $\hat{a}_i$'s are the predictor coefficients. These coefficients could have been used directly in the synthesis filters 9 and 22; however, in order to achieve higher robustness to channel errors, it is necessary to modify these coefficients so that the resulting LPC spectrum has slightly larger bandwidth. Such a bandwidth expansion procedure smoothes very sharp formant peaks and avoids occasional chirps in the quantized speech. In addition, it reduces the effective length of the impulse response of the synthesis filter, and this in turn reduces the propagation of channel error effects in the decoded speech.

This bandwidth expansion procedure is performed by the bandwidth expansion module 51 in the following way. Given the LPC predictor coefficients $\hat{a}_i$'s, the bandwidth expansion is achieved by replacing $\hat{a}_i$'s by

$$a_i = \lambda^i \hat{a}_i,\ i=1,2,,..., 50, \qquad (6)$$

where $\lambda$ is given by

$$\lambda = e^{-2\pi B/f_s} \qquad (7)$$

for speech sampled at $f_s$ Hz and a desired bandwidth expansion of B Hz. This has the effects of moving all the poles of the synthesis filter radially toward the origin by a factor of $\lambda$ which is in between 0 and 1. Since the poles are moved away from the unit circle, the formant peaks in the frequency response are widened. A suitable bandwidth expansion amount is 30 Hz.

After such bandwidth expansion, the modified LPC predictor has a transfer function of

$$P(z)=\sum_{i=1}^{50} a_i z^{-i}\ . \qquad (8)$$

The modified coefficients are then fed to the synthesis filters 9 and 22. These coefficients are also fed to the impulse response vector calculator 12.

The synthesis filters 9 and 22 actually consist of a feedback loop with the 50-th order LPC predictor in the feedback branch. The transfer function of this synthesis filter is

$$F(z)=\frac{1}{1-P(z)} \qquad (9)$$

Note that although so far we have assumed that the synthesis filter is a LPC-type all-pole filter updated by LPC analysis, perceivably, the coding system will also work if we use a gradient method to update this filter, or if we replace this all-pole filter by a pole-zero filter.

Similar to the perceptual weighting filter, the synthesis filters 9 and 22 could have been updated for every new input speech vector to achieve better performance. However, to reduce the coder complexity, here we only update it once every 8 vectors. To achieve maximum reduction in complexity, the synthesis filter updates should be "synchronized" to the perceptual weighting filter updates, as mentioned above.

It should be noted that the perceptual weighting filter coefficients can alternatively be obtained as a by-product of the backward synthesis filter adapter 23. The way to accomplish this is as follows. In the Durbin recursion of our 50-th order autocorrelation LPC analysis, as we go from order 1 to order 50, we can pause at order 10 and extract a 10-th order LPC predictor as a by-product of the 50-th order recursion. Then, we can feed the coefficients of this 10-th order LPC predictor to the weighting filter coefficient calculator 38 to derive a 10-th order weighting filter. In this way, blocks 36 and 37 are by-passed, and the corresponding complexity can be saved. However, the resulting perceptual weighting filter will be different from the one obtained by the original method, since now the filter is based on the quantized speech rather than the unquantized original speech. Theoretically, the perceptual weighting filter obtained by this new method will be somewhat inferior to the one by the original method, since it is based on noisy speech and may not have accurate spectral information of the input speech. Therefore, unless it is really necessary to save the complexity of blocks 36 and 37, the original method is preferred.

Having discussed the backward synthesis filter adapter 23 in detail, now refer to FIG. 1 again. Essentially, all the coder operations described so far are the preparation for the excitation codebook search. One last operation that has to be done before the codebook search is the gain adaptation which we will describe below.

The excitation gain $\sigma(n)$ is a scaling factor used to scale the selected excitation vector y(n). This gain $\sigma(n)$ is a scalar quantity, that is, a single number rather than a vector which contains several numbers. The excitation gain $\sigma(n)$ is updated for every vector (i.e., for every time index n) by the backward vector gain adapter 20. The preferred embodiment of this backward vector gain adapter 20 is shown in FIG. 4.

The backward vector gain adapter in FIG. 4 takes the gain-scaled excitation vector e(n) as its input, and produces an excitation gain $\sigma(n)$ as its output. Basically, it attempts to "predict" the gain of e(n) based on the gains of e(n-l), e (n-2),... by using adaptive linear prediction in the logarithmic gain domain. After such a predicted gain of e(n) is obtained, it is used as the output excitation gain $\sigma(n)$. It can be shown that such a gain adapter is robust to channel errors.

This gain adapter operates as follows. The 1-vector delay unit 67 makes the previous gain-scaled excitation vector e(n-1) available. The Root-Mean-Square (RMS) calculator 39 then calculates the RMS value of the vector e(n-1). The RMS value of a vector is computed as follows. The components of the vector are first squared. The sum of these squared values are then divided by the number of components, i.e., the vector dimension. Then, the square root of the resulting number is defined as the RMS value of the vector.

Next, a logarithmic function of the RMS value of e(n-1) is computed by the logarithm calculator 40. Note that it does not matter whether the logarithmic function is of base 10, base 2, or natural base, as long as the inverse logarithm calculator 47 later uses the same base to reverse the operation exactly.

A log-gain offset value is determined in the coder design stage and is stored in the log-gain offset value holder 41. The purpose of applying this offset value is to reduce some adverse effects caused by the fact that the logarithmic gain is not a zero-mean signal in general. This log-gain offset value is appropriately chosen so as to minimize such adverse effects during important speech waveform portions. For example, suppose the logarithm calculator 40 computes the dB value of its input (i.e., take base-10 logarithm and then multiply the result by 20), and suppose the input speech samples are represented by 16-bit integers, which range from -32768 to +32767. Then, a suitable log-gain offset value is 50 dB. This value is roughly equal to the average excitation gain level (in dB) during voiced speech when the speech peak magnitude is about -6 dB below saturation.

The adder 42 subtracts this log-gain offset value from the logarithmic gain produced by the logarithm calculator 40. The resulting offset-removed logarithmic gain $\delta(n-1)$ then goes through the delay unit and buffer 43 and the linear

predictive analysis module 44. Again, blocks 43 and 44 operate in exactly the same way as blocks 36 and 37 in the perceptual weighting filter adapter module 3 (FIG. 3), except that the signal under analysis is now the offset-removed logarithmic gain rather than the input speech. (Note that one gain value is produced for every 5 speech samples.)

The linear predictive analysis module 44 performs 10-th order autocorrelation LPC analysis with a 100-sample Hamming window placed on previous offset-removed logarithmic gains. Let $\hat{R}(z)$ be the transfer function of the resulting LPC predictor.

$$\hat{R}(z) = \sum_{i=1}^{10} \hat{\alpha}_i z^{-i} . \qquad (10)$$

The bandwidth expansion module 45 then moves the roots of this polynomial radially toward the z-plane original in a way similar to the module 51 in FIG. 5. More specifically, let

$$R(z) = \sum_{i=1}^{10} \alpha_i z^{-i} . \qquad (11)$$

be the transfer function of the bandwidth-expanded LPC predictor. Then, its coefficients are computed as

$$\alpha_i = (0.9)^i \hat{\alpha}_i \qquad (12)$$

Such bandwidth expansion allows the gain adapter 20 to be more robust to channel errors. These $\alpha_i$'s are then used as the coefficients of the log-gain linear predictor 46.

This predictor 46 can be updated for each log-gain sample to achieve better performance at the expense of higher complexity. In our preferred embodiment, we update it once every 8 log-gain samples (corresponding to 5 ms). The updates can be synchronized to the perceptual weighting filter and the synthesis filter, but they do not have to.

The log-gain linear predictor 46 has a transfer function of R(z). This predictor attempts to predict $\delta(n)$ based on a linear combination of $\delta(n-1)$, $\delta(n-2)$, ..., $\delta(n-10)$. The predicted version of $\delta(n)$ is denoted as $\hat{\delta}(n)$ and is given by

$$\hat{\delta}(n) = \sum_{i=1}^{10} \alpha_i \delta(n-i) \qquad (13)$$

After $\hat{\delta}(n)$ has been produced by the log-gain linear predictor 46, we add back the log-gain offset value stored in 41. The resulting value is then transmitted to the inverse logarithm calculator 47, which reverses the operation of the logarithm calculator 40 and converts the gain from the logarithmic domain to the linear domain. A gain limiter then clips the linear gain when the gain is unreasonably large or unreasonably small. For the magnitude range corresponding to 16-bit integer input (0 to 32767), reasonable clipping levels are 1 and 10000. For other input magnitude ranges, these clipping levels should be adjusted accordingly.

The excitation gain obtained this way by the backward vector gain adapter 20 is used in the gain scaling unit 21 and the codebook search module 24. In this invention, we have also developed an alternative backward vector gain adapter shown in FIG. 6 through FIG. 8. However, we will first finish the description of the encoder and the decoder in FIG. 1 and FIG. 2 before we describe that altemative gain adapter.

Blocks 12 through 18 constitute a codebook search module 24. This codebook search module iteratively searches through the 1024 candidate codevectors in the excitation VQ codebook 19 and find the index of the best codevector which gives a corresponding quantized speech vector that is closest to the input speech vector. Note that the codebook search module shown in FIG. 1 is only a specific efficient implementation of the codebook search; there are many other equivalent ways to search the codebook.

In FIG. 1, we assume that a gain-shape structured excitation VQ codebook 19 is used. Such a structured codebook is introduced to reduce complexity. For example, at a vector dimension of 5 samples and a bit-rate of 16 kb/s, or 2 bits/sample for 8 kHz sampling, the codebook 19 will have 1024 codevectors, each of which can be identified by a 10-bit address (from here on referred to as the "codebook index"). In principle, we could have used 1024 fully independent codevectors to achieve the best possible performance. However, the resulting complexity is very high. To reduce the codebook search complexity, we decompose the 10-bit codebook into two smaller codebooks: one 7-bit "shape codebook" containing 128 independent codevectors and one 3-bit "gain codebook" containing 8 scalar values that are symmetric with respect to zero (i.e., one bit for sign, two bits for magnitude). The final output codevector is the product of the best shape codevector (from the 7-bit shape codebook) and the best gain code (from the 3-bit gain codebook). With this 10-bit gain-shape structured codebook, the codebook search complexity is only slightly higher than the search complexity of a 7-bit fully independent codebook.

The principle of the codebook search module 24 is explained below so that it is easier to understand the operation

of this module. In principle, the codebook search module 24 scales each of the 1024 candidate codevectors by the current excitation gain σ(n) and then passes the resulting 1024 vectors one at a time through a cascaded filter consisting of the synthesis filter F(z) and the perceptual weighting filter W(z). The filter memory is initialized to zero each time the module feeds a new codevector to the cascaded filter whose transfer function is H(z) = F(z)W(z).

The filtering of VQ codevectors can be expressed in terms of matrix-vector multiplication. Let $y_j$ be the j-th codevector in the 7-bit shape codebook, and let $g_i$ be the i-th levels in the 2-bit magnitude codebook. In addition, the effect of the sign bit can be represented in terms of a sign multiplier $\eta_k$ = 1 or -1, for k = 0 or 1. Let {h(n)} denote the impulse response sequence of the cascaded filter. Then, when the codevector specified by the codebook indices i, j, and k is fed to the cascaded filter H(z), the filter output can be expressed as

$$\tilde{\mathbf{x}}_{ijk} = \mathbf{H}\sigma(n)\eta_k g_i \mathbf{y}_j \qquad (14)$$

where

$$\mathbf{H} = \begin{bmatrix} h(0) & 0 & 0 & 0 & 0 \\ h(1) & h(0) & 0 & 0 & 0 \\ h(2) & h(1) & h(0) & 0 & 0 \\ h(3) & h(2) & h(1) & h(0) & 0 \\ h(4) & h(3) & h(2) & h(1) & h(0) \end{bmatrix} \qquad (15)$$

The task of the codebook search module 24 is to find the best combination of three indices: the 7-bit shape codebook index j that identifies the best shape codevector, the 2-bit magnitude codebook index that identifies the best magnitude value, and the 1-bit sign index that determines whether +1 or -1 should be used to multiply the selected magnitude value. More specifically, it searches for the three best indices i, j, and k which minimize the following Mean-Squared Error (MSE) distortion.

$$D = \|\mathbf{x}(n) - \tilde{\mathbf{x}}_{ijk}\|^2 = \|\mathbf{x}(n) - \sigma(n)\eta_k g_i \mathbf{H}\mathbf{y}_j\|^2 \qquad (16)$$

Expanding the terms gives us

$$D = \|x(n)\|^2 - 2\sigma(n)\eta_k g_i x^T(n)Hy_j + \sigma^2(n)\, g_i^2\, \|Hy_j\|^2 \qquad (17)$$

Since the term $\|x(n)\|^2$ is fixed during the codebook search, minimizing D is equivalent to minimizing

$$\hat{D} = -2\sigma(n)\eta_k g_i p^T(n)y_j + \sigma^2(n)\, g_i^2\, E_j \qquad (18)$$

where

$$p(n) = H^T x(n)\,, \qquad (19)$$

and

$$E_j = \|Hy_j\|^2. \qquad (20)$$

The most computationally intensive part of the distortion calculation is the norm square term $\|\mathbf{H}y_j\|^2 = E_j$ and the inner product term $p^T(n)y_j$. Note that $E_j$ is actually the energy of the j-th filtered shape codevectors and does not depend on the VQ target vector x(n). Also note that the shape codevector $y_j$ is fixed, and the matrix **H** only depends on the synthesis filter and the weighting filter, which are fixed over a period of 8 speech vectors. Consequently, $E_j$ is also fixed over a period of 8 speech vectors. Based on this observation, when the two filters are updated, we can compute and store the 128 possible energy terms $E_j$, j = 0, 1, 2, ..., 127 (corresponding to the 128 shape codevectors) and then use these energy terms repeatedly for the codebook search during the next 8 speech vectors. This arrangement significantly reduces the codebook search complexity.

To save even more computation, before we start the codebook search for each new speech vector, we can precompute and store the two arrays

$$b_i = 2\sigma(n)g_i \qquad (21)$$

and

$$c_i = \sigma^2(n)\, g_i^2 \qquad (22)$$

for i = 0, 1, 2, 3. This requires negligible complexity but saves computations in the codebook search. We can now express $\hat{D}$ as

$$\hat{D} = -\eta_k b_i p^T(n)y_j + c_i E_j \qquad (23)$$

With the $E_j$, $b_i$, and $c_i$ tables precomputed and stored, the codebook search module then computes the vector p (n) according to Eq. (19), and then evaluates $\hat{D}$ according to Eq. (23) for each combination of i, j, and k. The three indices i, j, and k which correspond to the minimum $\hat{D}$ are concatenated to form the output of the codebook search module - single 10-bit best codebook index.

With the codebook search principle introduced, the operation of the codebook search module 24 is now described below. Every time when the synthesis filter 9 and the perceptual weighting filter 10 are updated, the impulse response vector calculator 12 computes the first 5 samples of the impulse response of the cascaded filter F(z)W(z). To compute the impulse response vector, we first set the memory of the cascaded filter to zero, then excite the filter with an input sequence {1, 0, 0, 0, 0}. The corresponding 5 output samples of the filter are h(0), h(1), ..., h(4), which constitute the desired impulse response vector. After this impulse response vector is computed, it will be held constant and used in the codebook search for the following 8 speech vectors, until the filters 9 and 10 are updated again.

Next, the shape codevector convolution module 14 computes the 128 vectors $\mathbf{H}y_j$, j = 0, 1, 2,..., 127. In other words, it convolves each shape codevector $y_j$, j = 0, 1, 2,..., 127 with the impulse response sequence h(0), h(1), ..., h(4), where the convolution is only performed for the first 5 samples. The energy of the resulting 128 vectors are then computed and stored by the energy table calculator 15 according to Eq. (20). The energy of a vector is defined as the sum of the squared value of each vector component.

Note that the computations in blocks 12, 14, and 15 are performed only once every 8 speech vectors, while the other blocks in the codebook search module perform computations for each speech vector.

The scaled magnitude tables calculator 16 computes the $b_i$ and $c_i$ tables according to Eqs. (21) and (22). Since the excitation gain σ(n) is updated for every new speech vector, so are the $b_i$ and $c_i$ tables. Nevertheless, the complexity of such table updates is negligible, since there are only four entries in each table.

Next, the time-reversed convolution module 13 computes the vector $p(n)=\mathbf{H}^T x(n)$. This operation is equivalent to first reversing the order of the components of the codebook search target vector x(n), then convolving the resulting vector with the impulse response vector, and then reverse the component order again.

Once $E_j$, $b_i$, and $c_i$ tables are precomputed and stored, and the vector p(n) is also calculated, then the error calculator 17 and the best codebook index selector 18 work together to perform the following efficient codebook search algorithm.

1. Set $\hat{D}_{min} = \infty$.
2. Set the shape codebook index j = 0
3. Compute the inner product $p^T(n)y_j$.
4. If $p^T(n)y_j \geq 0$, then the "sign multiplier" $\eta_k$ in Eq. (24) should be +1 in order to get a lower distortion, so we set the sign bit k to 0, then go to step 6.
5. Otherwise, if $p^T(n)y_j < 0$, then $\eta_k$ should be -1, so we set the sign bit k to 1 and proceed to step 6.
6. Set the magnitude codebook index i = 0
7. Compute $\hat{D}_i = -\eta_k b_i p^T(n)y_j + c_i E_j$
8. If $\hat{D}_i \geq \hat{D}_{min}$, then this i, j, k combination gives a higher distortion than the lowest distortion found previously, so go to step 10 for the next i.
9. Otherwise, if $\hat{D}_i < \hat{D}_{min}$, then we have found a distortion lower than the previous lowest distortion. So, reset the lowest distortion by setting $\hat{D}_{min} = \hat{D}_i$. Also, store this i, j, k combination by setting $i_{min} = i$, $j_{min} = j$, and $k_{min} = k$. Proceed to step 10.
10. Set i = i + 1. If i < 3, go to step 7; otherwise, proceed to step 11.
11. Set j = j + 1. If j < 127, go to step 3; otherwise, proceed to step 12.
12. End procedure.

When the algorithm proceeds to here, all 1024 possible combinations of gains and shapes have been searched through. The resulting $k_{min}$, $i_{min}$, and $j_{min}$ are the desired channel indices for the sign, the magnitude, and the shape, respectively. The output best codebook index (10-bit) is the concatenation of these three indices, and the corresponding best excitation codevector is $y(n) = \eta_{k_{min}} g_{i_{min}} y_{j_{min}}$.

Basically, the above codebook search algorithm goes through the shape codevectors one by one, and for each shape codevector, the sign bit is first determined by the sign of the inner product $p^T(n)y_j$, and then the magnitude bits are determined by searching through the four magnitude levels for the given shape codevectors. As we proceed, we keep a record of the lowest distortion and channel indices that gives this lowest distortion. The final channel indices are readily available once we go through all possible combinations of gains and shapes. Because we precompute and store $E_j$, $b_i$, and $c_i$ terms, we can save a significant amount of computations.

In this invention, we partially protect the best codebook index against channel errors by using the principle of Gray coding, as described in the patent by De Marca and Jayant and the article by Zeger and Gersho. This Gray coding method reduces channel error effect without adding any redundancy bit. Significant . reduction of error sensitivity can be obtained by applying Gray coding only to the 7-bit shape codebook. In this case, we can carefully assign the 7-bit

shape codebook index using Gray coding in the design stage; then, in actual encoding of speech, the selected best shape codebook index automatically comes out Gray-coded, and no explicit mapping for Gray coding is needed. Similarly, the 2-bit magnitude codebook can also be separately Gray-coded. In principle, however, even lower error sensitivity can be achieved if we apply Gray coding to the entire 10 bits of the best codebook index in a jointly optimal way. In this case, explicit mapping from the 10-bit best codebook index to the corresponding 10-bit Gray-code is needed The optional Gray-code encoder 25 performs this mapping function.

If this speech encoder is used alone, the Gray-coded best codebook indices form a bit stream which is directly transmitted through the communication channel. On the other hand, if several such speech encoder share the same communication channel, then it is usually necessary to multiplex the bit streams from different speech encoders. The optional multiplexer 26 performs such multiplexing function in this case.

Although the encoder has identified and transmitted the best codebook index so far, some additional tasks have to be performed in preparation for the encoding of the following speech vectors. First, the best codebook index is fed to the excitation VQ codebook to extract the corresponding best codevector y(n) defined in Step 12 of the codebook search above. This best codevector is then scaled by the current excitation gain $\sigma(n)$ in the gain stage 21. The resulting gain-scaled excitation vector is $e(n) = \sigma(n)y(n)$.

This vector e(n) is then passed through the synthesis filter 22 to obtain the current quantized speech vector s(n). Note that blocks 19 through 23 form a simulated decoder 8. Thus, the quantized speech vector s(n) is actually the simulated decoded speech vector when there is no channel errors. The encoder has to have this simulated decoder 8 because it needs to keep track of the quantized speech the decoder will produce so that the synthesis filter updates generated by block 23 will be the same as the updates in the decoder. Similarly, the backward vector gain adapter 20 can generate the same excitation gain updates as in the decoder only if the signal e(n) is the same as its counterpart in the decoder.

The above explanation assumes zero bit error. In practice, however, since the two adapters 20 and 23 are both robust to channel errors, when bit errors cause any signal mismatch between the encoder and the decoder, such a mismatch will eventually decay to zero. In other words, some time after the hits of bit errors, the encoder and the decoder will keep track of each other again. Hence, the above arguments still apply.

One last task the encoder has to perform before proceeding to encode the next speech vector is to update the memory of the synthesis filter 9 and the perceptual weighting filter 10. To do this, we first discard the filter memory left over after performing the ringing filtering mentioned earlier. The filter memory which was stored before the ringing filter operation is copied back to the two filters. Then, the switch 5 is closed, i.e., connected to node 7, and the gain-scaled excitation vector e(n) just computed above is passed through the two filters 9 and 10. The corresponding output vector is discarded, but the final filter memory after filtering e(n) is retained. This set of filter memory will be used to perform the ringing filtering while encoding the next speech vector.

The encoder operation described so far specifies the way to encode a single input speech vector. The encoding of the entire speech waveform is achieved by repeating the above operation for every speech vector.

In the above description of the encoder, it is assumed that the decoder knows the boundaries of the received 10-bit codebook indices and also knows when the synthesis filter needs to be updated (recall that this filter is updated once every 8 vectors). In practice, such synchronization information can be made available to the decoder by adding extra synchronization bits on top of the transmitted 16 kb/s bit stream. However, in many applications there is a need to insert synchronization bits as part of the 16 kbit/s bit stream. This can be done by "bit-robbing". More specifically, suppose a synchronization bit is to be inserted once every N speech vectors; then, for every N-th input speech vector, we can search through only half of the shape codebook and produce a 6-bit shape codebook index. In this way, we rob one bit out of every N-th transmitted codebook index and insert a synchronization bit instead. Signaling bits can also be inserted in a similar way if desired.

It is important to note that we cannot arbitrarily rob one bit out of an already selected 7-bit shape codebook index, instead, the encoder has to know which speech vectors will be robbed one bit and then search through only half of the codebook for those speech vectors. Otherwise, the decoder will not have the same decoded excitation codevectors for those speech vectors.

If the synthesis filter were updated for every speech vector, then the bitrob interval N could be any positive number. In our case, since the synthesis filter is updated once every 8 vectors, it is reasonable to let N be 8 or a multiple of 8 so that the decoder can easily determine the vectors at which the synthesis filter is updated. For a reasonable value of N, the resulting degradation in speech quality is expected to be negligible.

We now describe the operation of the decoder shown in FIG. 2. The bit stream from the communication channel is first demultiplexed by the demultiplexer 27, if a multiplexer has been used in the encoder. Then, if synchronization bits have been inserted as part of the bit stream, these synchronization bits are detected and extracted. The remaining signal coding bits then go through a Gray-code decoder 28 if there is a Gray-code encoder in the speech encoder. This Gray-code decoder performs inverse mapping of the Gray-code encoder.

The decoded best codebook index is used to extract the corresponding best codevector y(n) stored in the excitation

VQ codebook 29, which is identical to the codebook 19 in the encoder. This vector y(n) then goes through the gain stage 31 and the synthesis filter 32 to produce the decoded speech vector s(n).' The received codebook index may be different from the transmitted codebook index because of bit errors. However, the gain stage 31, the synthesis filter 32, the backward vector gain adapter 30, and the backward synthesis filter adapter 33 all operate in exactly the same way as their counterparts in the encoder (blocks 21, 22, 20, and 23, respectively). Therefore, the operations of these blocks are not repeated here.

The digital-to-analog (D/A) converter 34 converts the 5 samples of the decoded speech vector s(n) from digital back to analog form. The resulting analog signal is then filtered by an anti-image analog filter 35 (typically a low pass filter) to produce the analog output speech. This completes our detailed description of the preferred embodiment according to this invention.

In the following, we will describe an alternative embodiment of the backward vector gain adapters 20 and 30. This alternative backward vector gain adapter is shown in FIG. 6 through FIG. 8 in three equivalent forms. This backward vector gain adapter is a vector generalization of the robust Jayant gain adapter (See the articles by Jayant and by Goodman and Wilkinson) which is used in the CCITT 32 kb/s ADPCM coding standard. The basic ideas have been proposed in Chen and Gersho's September 1987 article cited above. However, the backward vector gain adapter in FIG. 6 through FIG. 8 represents a novel implementation of such ideas.

When compared with the adaptive logarithmic linear predictive gain adapter in FIG. 4, this alternative gain adapter gives slightly inferior performance. However, the advantage is that this alternative gain adapter has a much lower complexity. Thus, when the digital circuitry of the coder has enough processing power to implement the entire preferred embodiment of the coder, the gain adapter in FIG. 4 should be used. On the other hand, if the processing power is not quite enough, then this alternative gain adapter may be preferable.

Since the robust Jayant gain adapter is a well-known prior art, in the following we will concentrate on the operation of the alternative backward vector gain adapter rather than on the heuristic behind it.

The gain adapter in FIG. 6 can directly replace the adapter in FIG. 4, although it is not as efficient as the adapters in FIG. 7 and FIG. 8. Basically, the current gain-scaled excitation vector e(n) first goes through the 1-vector delay unit 52 and the RMS calculator 53 to produce $\sigma_e(n-1)$, the RMS value of e(n-1). Then, the multiplier 54 multiplies this value by the reciprocal of the previous excitation gain $\sigma(n-1)$. The resulting value $\sigma_y(n-1)$ is actually the RMS value of the previous unscaled excitation codevector y(n-1). The gain multiplier calculator 55 then computes a gain multiplier M(n-1) as a function of $\sigma_y(n-1)$.

$$M(n-1) = f(\sigma_y(n-1)) \tag{24}$$

The gain multiplier function f(x) is defined by

$$f(x) = \begin{cases} [(1-x)\sigma_{min}^{1-\beta} + x\sigma_{av}^{1-\beta}]e^{c_2(x-1)} & \text{if } 0 \le x < 1 \\ \sigma_{av}^{1-\beta}e^{c_1(x-1)} & \text{if } 1 \le x < 4\,, \\ \sigma_{av}^{1-\beta}M_{max} & \text{if } x \ge 4 \end{cases} \tag{25}$$

where suitable values of the parameters are $\sigma_{min} = 1$, $\sigma_{av} = 150$, $\beta = (31/32)^5 = 0.853$, $c_1 = \ln(M_{Max})/3$, $c_2 = -\ln(M_{min})$, $M_{max} = 1.8$, and $M_{min} = 0.8$, assuming 16-bit integer input. If the input magnitude range is different from 16-bit integers, $\sigma_{min}$ and $\sigma_{av}$ should be changed accordingly, while the other parameters should remain the same.

Once the gain multipler M(n-1) is obtained, the robust Jayant gain recursion calculator 56 computes the current excitation gain $\sigma(n)$ as

$$\sigma(n) = M(n-1)\sigma^{\beta}(n-1). \tag{26}$$

Then, this $\sigma(n)$ is clipped at value 1 or 10000 if it is too small or too large. (Here this gain limiter function is considered as part of the block 56.) The resulting output $\sigma(n)$ is the desired excitation gain. This gain also goes through the 1-sample delay unit 57 and the reciprocal module 58 to complete the loop.

The gain adapter in FIG. 6 just described above is not quite practical since it requires some redundant computations. It is described here in order to show that this generalized robust Jayant gain adapter can be implemented in such a way that it can directly replace the gain adapter in FIG. 4.

It is clear that we do not have to compute $\sigma_y(n-1)$ from the gain-scaled excitation vector e(n-1). Instead, we can directly compute it from the previous unscaled excitation vector y(n-1) to save some computations. With this change, we can implement the gain adapter as shown in FIG. 7. The gain adapter in FIG. 7 is equivalent to the one in FIG. 6. However, it cannot directly replace the preferred gain adapter in FIG. 4, since the input to this gain adapter is now the unscaled excitation codevector y(n) rather than the gain-scaled excitation vector e(n).

The gain adapter in FIG. 7 operates in essentially the same way as the one in FIG. 6, except for the change of the input signal and the elimination of the reciprocal module 58 and the multiplier 54. The remaining blocks in FIG. 7 perform exactly the same operations as their counterparts in FIG. 6. The description of each block is therefore omitted here.

The computational effort in blocks 59, 60, and 61 can be completely eliminated, resulting in an even more computationally efficient implementation shown in FIG. 8. This simplification is obtained based on the following observations.

In FIG. 7, we note that once the controlling parameters for the gain multiplier function f(x) in Eq. (25) are determined and fixed, the gain multiplier M(n-1) only depends on $\sigma_y$(n-1), the RMS value of the best excitation codevector selected at time (n-1). We also note that the 1024 candidate codevectors can only have at most 512 distinct RMS values, since one of the 10 codebook index bits is a sign bit. Hence, we can pre-compute these 512 possible RMS values of the codevectors, and then pre-compute the corresponding 512 possible gain multipliers according to Eq. (25). These 512 possible gain multipliers can be stored in a table, where the 9-bit index of any stored gain multiplier corresponds to the 7-bit shape codebook index and the 2-bit magnitude codebook index of the 2 codevectors which give rise to that gain multiplier. Then, this gain multiplier table can be directly addressed by the shape and magnitude codebook indices of the selected codevector. In other words, we do not have to compute the gain multiplier; we can simply use the best codebook index to extract the corresponding gain multiplier.

This scheme is shown in FIG. 8. The gain multiplier table 64 uses the 7 shape codebook index and the 2 magnitude codebook index at time (n-1) to perform table look-up and extract the corresponding gain multiplier. The other two blocks (65 and 66) perform the same operation as their counterparts in FIG. 7.

FIG. 7 and FIG. 8 show an example of time-space (or speed-memory) trade-off. On the one hand, if less computation or faster processing is desired, then FIG. 8 should be used. On the other hand, if we cannot afford the 512 words of extra memory space for storing the gain multiplier table 64, then FIG. 7 is more memory-efficient. FIG. 8 is in effect a direct generalization of the robust Jayant gain adapter used in ADPCM coders, while FIG. 7 implements the novel concept of computing the gain multiplier "on-the-fly" based on the RMS value of the selected excitation VQ codevector.

Finally, in the Appendix we describe the method to optimize the shape codebook and the magnitude codebook based on a training speech database. Such codebook optimization typically improves the signal-to-noise ratio (SNR) by 1 to 2 dB and also improves the perceptual speech quality noticeably.

## APPENDIX

### Closed-Loop VQ Codebook Optimization

The shape codebook can be optimized using an iterative algorithm similar to the LBG algorithm, as described by Y. Linde, A. Buzo, and R. M. Gray, "An algorithm for vector quantizer design," IEEE Trans. Commun., COM-28, pp. 84-95 (January 1980). However, the distortion criterion in this codebook design is not the usual MSE criterion, but the actual weighted MSE distortion "seen" by the coder (i.e., with the predictor loop closed). The basic idea is the same as the LBG algorithm. Given a training set and an initial codebook of size N, we encode the training set and divide the training vectors into N clusters based on the "nearest-neighbor" encoding rule. The "centroid" of each cluster is next computed and is used to replace the representative codevector of that cluster. Then, we encode the training set again using the new codebook containing the centroid just computed, and the centroid of each of the N new clusters is computed again. This process is repeated until a stopping criterion is met.

Whether we can design an optimal VQ codebook for a given VQ problem usually depends on whether we can find a way to compute the centroid of each of the N clusters. Once this "centroid condition" is found, the rest of the codebook design algorithm is relatively straightforward. The centroid condition of our closed-loop excitation VQ codebook design is derived below.

Suppose at time n, the VQ target vector is x(n), the impulse response matrix (Eq. (15)) is **H**(n), the estimated excitation gain is $\sigma$(n), the selected VQ codevector magnitude level is g(n), and the "sign multiplier" is $\eta$(n) (where $\eta$(n) = +1 for positive sign, -1 for negative sign). Also, let $y_j$ be the j-th shape codevector, and let $N_j$ be the set of time indices for which $y_j$ is selected as the best shape codevector while encoding the training set. Then, after encoding the entire training set once, the total accumulated distortion of the j-th cluster corresponding to $y_j$ is given by

$$D_j = \sum_{n \in N_j} \|x(n) - H(n)\eta(n)\sigma(n)g(n)y_j\|^2 . \quad (A.1)$$

Taking the partial derivative with respect to $y_j$ and setting the result to zero, we obtain

$$\frac{\partial D_j}{\partial y_j} = \sum_{n \in N_j} [-2\eta(n)\sigma(n)g(n)\mathbf{H}^T(n)x(n) + 2\sigma^2(n)g^2(n)\mathbf{H}^T(n)\mathbf{H}(n)y_j] = 0 . \quad (A.2)$$

Thus, the centroid $y_j^*$ of the j-th cluster which minimizes $D_j$ satisfies the following normal equation.

$$\left[\sum_{n \in N_j} \sigma^2(n)g^2(n)\mathbf{H}^T(n)\mathbf{H}(n)\right] y_j^* = \left[\sum_{n \in N_j} \eta(n)\sigma(n)g(n)\mathbf{H}^T(n)x(n)\right] \quad (A.3)$$

In actual codebook design, the two summations on both sides of this normal equation are separately accumulated for each of the N shape codevectors while encoding the training speech using the coder. Then, when the encoding of the entire training set is finished, we solve the N resulting normal equations for j = 0, 1, 2,..., N-1 to obtain the N centroids. These centroids then replace the old codebook, and the encoding of the training set re-starts again. We repeat this codebook update procedure until a stopping criterion is met.

In the original LBG algorithm for direct VQ (without the predictor loop), the overall distortion and the updated codebook is guaranteed to converge to a local optimum. A basic requirement for such convergence is that the training vectors be fixed throughout all iterations; this is the case in the codebook design of direct VQ.

In our case here, however, our closed-loop codebook design is not guaranteed to converge. This is because we have closed the predictor loop, so in each iteration we will have a different set of training vectors {x(n)}. Since the training vectors are changing from iteration to iteration, in general the distortion and the codebook will not converge (it is like "shooting a flying target"). In actual codebook design, however, the overall distortion almost always decreases in the first few iterations, so we still get a useful reduction in the overall distortion "seen" by the coder. We used an iteration-stopping criterion similar to the one proposed for backward gain-adaptive VQ codebook design (see Chen and Gersho's September 87 article cited above).

Given an initial codebook, this closed-loop optimization algorithm typically gives an SNR improvement on the order of 1 to 1.5 dB in actual coding of outside-training-set speech. The improvement in perceptual speech quality is usually quite significant (unless the initial codebook is already very good to start with). In general, we found this optimization technique to be quite useful.

The initial codebook can be obtained by several methods. In the following, we describe our method of generating the initial codebook when the generalized Jayant gain adapter in FIG. 7 is used in the coder. A similar approach can be used when the gain adapter in FIG. 4 is used instead.

Given the training speech, we first perform high-order backward-adaptive LPC prediction to obtain the open-loop LPC residual. Then, the robust gain adaptation algorithm is applied to this LPC residual, and the estimated gain $\sigma(n)$ is used to normalize the residual vectors. Since the VQ codebook is not available yet, rather than using the RMS value of the selected VQ codevector, we used the RMS value of the normalized residual vector as the variable x in Eq. (25) to determined the gain multiplier. The RMS value of the normalized residual vector is then quantized by the 2-bit gain magnitude codebook, and the corresponding magnitude quantizer output is used to further re-normalize the already normalized residual vector. Such double normalization will give residual "shape" vectors which are suitable for training the excitation VQ shape codebook. Once such residual "shape" training vectors are obtained from the training set, if we wish, we may design an initial codebook using the open-loop codebook design algorithm proposed by Chen and Gersho (September 87). For simplicity, however, we simply uniformly sampled (in the time axis) N residual shape training vectors and collected them as the initial codebook.

Note that it is also possible to perform closed-loop optimization of this magnitude codebook based on the actual weighted MSE distortion "seen" by the coder. We only have to slightly modify the derivation above in order to obtain the centroid condition of the magnitude codebook.

Let y(n) denote the selected shape codevector at time n. Also, let $g_i$ be the i-th magnitude codebook entry and $N_i$ be the set of time indices for which the magnitude $g_i$ is selected while encoding the training set. Then, the distortion associated with $g_i$ is

$$D_i = \sum_{n \in N_i} \|x(n) - \eta(n)\sigma(n)g_i\mathbf{H}(n)y(n)\|^2 \quad (A.4)$$

Setting to zero the partial derivatives with respect to $g_i$ yields

$$\frac{\partial D_i}{\partial g_i} = \sum_{n \in N_i} [-2\eta(n)\sigma(n)x^T(n)H(n)y(n) + 2\sigma^2(n)g_iE(n)] = 0\,, \quad (A.5)$$

where $E(n) = \|\mathbf{H}(n)y(n)\|^2$ is computed in Eq. (20) during the efficient VQ codebook search. Therefore, the centroid $g_i^*$ which minimizes the distortion $D_i$ is given by

$$g_i^* = \frac{\sum_{n \in N_i} \eta(n)\sigma(n)x^T(n)H(n)y(n)}{\sum_{n \in N_i} \sigma^2(n)E(n)}\,. \quad (A.6)$$

Again, the two summations are accumulated for each magnitude level index i while the training speech is encoded by the coder. After the entire training set is encoded, the new centroids are computed as the ratios of the two summations. These new centroids then replace the old codebook, and the iteration goes on until a stopping criterion is met. This closed-loop magnitude codebook optimization can further improve the coder's performance.

## Claims

**1.** A method of encoding speech for communication to a decoder for reproduction, comprising the steps of

grouping said speech into frames of speech each having a plurality of samples with each frame representing a portion of said speech;
forming a target set of speech-related information in response to at least a portion of a frame of speech which is the current frame of speech;
determining a set of synthesis filter coefficients in response to at least a portion of a frame of speech;
calculating information representing a synthesis filter from said set of synthesis filter coefficients;
iteratively calculating an error value for each of a plurality of candidate sets of excitation information stored in a table in response to the filter information and each of said candidate sets and said target set of speech-related information, including
calculating an adapted gain by which each candidate set is multiplied prior to calculating the respective error value;
selecting one of said candidate sets of excitation information as producing the smallest error value;
communicating information including information representing the location in the table of the selected one of said candidate sets of excitation information for reproduction of said speech for the current frame of speech,
CHARACTERIZED IN THAT
the forming step includes forming a target set of speech-related information in response to a portion of the current frame of speech, which portion is the current speech vector;
the communicating step excludes communicating the set of synthesis filter coefficients, and the step of determining the set of synthesis filter coefficients includes determining them by linear predictive analysis from a speech vector representing at least a portion of a frame of simulated decoded speech, which vector occurred prior to the current speech vector.

**2.** A method of encoding speech as claimed in claim 1, wherein
the step of determining the set of filter coefficients includes determining, for every frame after the first frame, such a number of them and a precision of them that transmitting them for every speech vector of every frame would be impractical at the design bit rate and required accuracy of the coder.

**3.** A method of encoding speech as claimed in claim 1, wherein
the iteratively calculating and selecting steps include multiplying candidate sets of excitation information by a gain factor, including iteratively updating the gain factor by a logarithmic-based calculation that produces a weighted average of the previously calculated gains associated with previously selected vectors, said updating step including updating the weighting factors for the weighted average.

**4.** A method of encoding speech as claimed in claim 1 or claim 2 wherein

said synthesis filter is a finite impulse response filter;
said iteratively calculating step comprises iteratively calculating an error value for each of a plurality of candidate sets of excitation information stored in a table and selected in an order based on frequency of use in prior encoding of speech, in response to the finite impulse-response filter information and each of said candidate sets and said target set of excitation information, including multiplying each of said candidate sets by a gain factor, wherein a single candidate set is used in different iterations when and if multiplied by different gain factors;
said selecting step comprises selecting a candidate set of excitation information and a gain factor producing an error value below a predetermined value; and
said communicating step comprises communicating information including information representing the location in the table of the selected one of the candidate sets of excitation information, said communicated information not including any information regarding the set of filter coefficients.

**5.** A method of encoding speech as claimed in claim 4, wherein
the iteratively calculating and selecting steps include updating the gain factor by a logarithmic-based calculation that produces a weighted average of the previously calculated gains associated with previously selected vectors and then multiplying each of said candidate sets by the updated gain factor.

**6.** A method of encoding speech as claimed in claim 3 or claim 5, wherein
the gain up-dating step includes providing weighting factors for the logarithmic-based calculation that supply a stable gain characteristic.

**7.** A method of encoding speech as claimed in claim 6, wherein

the step of determining a set of synthesis filter coefficients includes holding them constant for a plurality of additional frames, and
the communicating step includes communicating gain information that is less than all of the gain information available from the iteratively calculating and selecting steps.

**8.** A method of encoding speech as claimed in claim 7, wherein the communicating step includes communicating a sign bit.

**9.** A method of encoding speech as claimed in claim 7 or claim 8, wherein
the communicating step includes communicating a gain amplitude adjustment that is distinguishable from the gain factor associated with communicated set of excitation information.

**10.** A method of encoding speech as claimed in any of the preceding claims including
associating each of the candidate sets of excitation information for storage in the table with an index that can be efficiently communicated and arranging the association of indices to limit inaccuracy in the event of a one-bit error in communicating each of said indices.

**11.** A method of encoding speech as claimed in claim 3, including

the additional step of iteratively pre-selecting the plurality of candidate sets of excitation information from among a larger plurality of such sets for storage in the table by
multiplying each of the larger plurality by each of a number of candidate gain factors,
testing the products for accuracy in modelling a set of training speech samples, and
reducing the larger plurality to the plurality for storage in the table on the basis of the results of the testing step.

**12.** A method of encoding speech as claimed in any of claims 7 to 9, including

the additional step of iteratively pre-selecting the plurality candidates of excitation information from among a larger plurality of such sets for storage in the table by
multiplying each of the larger plurality by each of a number of candidate gain factors,
testing the products for accuracy in modeling a set of training speech samples, and
reducing the larger plurality to the plurality for storage in the table on the basis of the results of the testing step.

**13.** A method of encoding speech as claimed in any of the preceding claims, wherein

the step of determining a set of filter coefficients includes determining at least twenty of them.

**14.** A method of decoding speech encoded by a method as claimed in any of the preceding claims comprising the steps of

initializing a synthesis filter suitably matched to the synthesis filter of the encoding method;
receiving a signal produced by the encoding method;
decoding the received signal to yield a set of excitation information;
assembling frames of output speech from a combination of the synthesis filter and the excitation information from the decoding step, each frame having a plurality of sample of the output speech;
determining a set of synthesis filter coefficients when appropriate in response to at least one frame of assembled output speech; and
calculating information representing a synthesis filter from said set of filter coefficients in preparation for the subsequent portion of the received signal.

**15.** A method of communicating, employing an encoding method as claimed in any of claims 1 to 13 and any corresponding decoding method, wherein

the iteratively calculating step of the encoding method includes
on a repetition cycle extending over a plurality of frames, omitting calculations for half of the candidate sets of excitation information stored in the encoding table, and
the communicating step includes
inserting a synchronization bit for each occurrence of the omitting step; and
the decoding method includes detecting the synchronization bit.

**16.** A method of encoding speech for communication to a decoder for reproduction as claimed in claim 1, wherein
the gain calculating step includes calculating said portion of the information necessary to specify the adapted gain at least partly from the prior adapted gain which multiplied the selected set of excitation information for a speech vector prior to the current speech vector, including multiplying said prior gain by a weighting factor which is iteration-dependent; and the communicating step excludes communicating at least a portion of information necessary to specify said adapted gain.

**17.** A method of encoding speech as claimed in claim 16, wherein
the step of determining the set of filter coefficients includes determining an order of them exceeding twentieth order.

**18.** A method of encoding speech as claimed in claim 1 wherein the step of determining the set of filter coefficients includes determining a set of filter coefficients for a synthesis of at least twentieth order from at least one speech vector representing at least a portion of a frame of simulated decoded speech, which vector occurred prior to the current speech vector.

**19.** A method of encoding speech as claimed in claim 18, wherein
the gain calculating step includes calculating said portion of the information necessary to specify the adapted gain at least partly from the prior adapted gain which multiplied the selected set of excitation information for a speech vector prior to the current speech vector, including multiplying said prior gain by a weighting factor which is iteration-dependent.

**Patentansprüche**

**1.** Verfahren zur Codierung von Sprache zur Übermittlung zu einem Decodierer zur Wiedergabe, mit folgenden Schritten:

Gruppieren der besagten Sprache in Sprachrahmen jeweils mit einer Mehrzahl von Abtastwerten, wobei jeder Rahmen einen Teil der besagten Sprache darstellt;
Bilden einer Zielmenge von sprachbezogenen Informationen als Reaktion auf mindestens einen Teil eines Sprachrahmens, der der aktuelle Sprachrahmen ist;
Bestimmen einer Menge von Synthesefilterkoeffizienten als Reaktion auf mindestens einen Teil eines Sprachrahmens;
Berechnen von einen Synthesefilter darstellenden Informationen aus der besagten Menge von Synthesefilterkoeffizienten ;
iteratives Berechnen eines Fehlerwertes für jede einer Mehrzahl von in Frage kommenden Mengen von in einer Tabelle gespeicherten Anregungsinformationen als Reaktion auf die Filterinformationen und jede der besagten in Frage kommenden Mengen sowie die besagte Zielmenge von sprachbezogenen Informationen, einschließlich von
Berechnen einer angepaßten Verstärkung, mit der jede infragekommende Menge vor Berechnen des entsprechenden Fehlerwertes multipliziert wird;
Auswählen einer der besagten in Frage kommenden Mengen von Anregungsinformationen als diejenige, die den geringsten Fehlerwert erzeugt;
Übermitteln von Informationen einschließlich von Informationen, die den Platz in der Tabelle der einen ausgewählten der besagten in Frage kommenden Mengen von Anregungsinformationen darstellen, zur Wiedergabe der besagten Sprache für den aktuellen Sprachrahmen, dadurch gekennzeichnet, daß
der Bildungsschritt das Bilden einer Zielmenge von sprachbezogenen Informationen als Reaktion auf einen Teil des aktuellen Sprachrahmens enthält, wobei dieser Teil der aktuelle Sprachvektor ist;
der Übermittlungsschritt das Übermitteln der Menge von Synthesefilterkoeffizienten ausschließt und der Schritt des Bestimmens der Menge von Synthesefilterkoeffizienten das Bestimmen derselben durch lineare Prädiktionsanalyse aus einem Sprachvektor, der mindestens einen Teil eines Rahmens simulierter decodierter Sprache darstellt, enthält, wobei dieser Vektor vor dem aktuellen Sprachvektor auftrat.

2. Verfahren zur Sprachcodierung nach Anspruch 1, wobei der Schritt des Bestimmens der Menge von Filterkoeffizienten das Bestimmen, für jeden Rahmen nach dem ersten Rahmen, einer solchen Anzahl derselben und einer Präzision derselben enthält, daß ihre Übertragung für jeden Sprachvektor jedes Rahmens bei der Soll-Bitrate und der erforderlichen Genauigkeit des Codierers unpraktisch wäre.

3. Verfahren zur Sprachcodierung nach Anspruch 1, wobei die Schritte des iterativen Berechnens und des Auswählens das Multiplizieren von in Frage kommenden Mengen von Anregungsinformationen mit einem Verstärkungsfaktor enthalten, einschließlich der iterativen Aktualisierung des Verstärkungsfaktors um eine logarithmisch basierende Berechnung, die ein gewichtetes Mittel der vorher berechneten Verstärkungen, die mit vorher ausgewählten Vektoren verbunden waren, erzeugt, wobei der besagte Aktualisierungsschritt das Aktualisieren der Gewichtungsfaktoren für das gewichtete Mittel enthält.

4. Verfahren zur Sprachcodierung nach Anspruch 1 oder Anspruch 2, wobei

das besagte Synthesefilter ein FIR-Filter ist;
der besagte Schritt des iterativen Berechnens das iterative Berechnen eines Fehlerwerts für jede einer Mehrzahl von in Frage kommenden Mengen von in einer Tabelle gespeicherten und in einer auf der Häufigkeit der Verwendung bei vorheriger Sprachcodierung beruhenden Reihenfolge ausgewählten Anregungsinformationen als Reaktion auf die FIR-Filter-Informationen und jede der besagten in Frage kommenden Mengen und die besagte Zielmenge von Anregungsinformationen, einschließlich des Multiplizierens jeder der besagten in Frage kommenden Mengen mit einem Verstärkungsfaktor, umfaßt, wobei eine einzelne infragekommende Menge in verschiedenen Iterationen benutzt wird, falls sie mit verschiedenen Verstärkungsfaktoren multipliziert wird;
der besagte Schritt des Auswählens das Auswählen einer in Frage kommenden Menge von Anregungsinformationen und eines Verstärkungsfaktors umfaßt, die einen Fehlerwert unterhalb eines vorbestimmten Wertes erzeugen; und
der besagte Übermittlungsschritt das Übermitteln von Informationen einschließlich von Informationen, die den Platz der einen ausgewählten der in Frage kommenden Mengen von Anregungsinformationen in der Tabelle darstellen, umfaßt, wobei die besagten übermittelten Informationen keine die Menge von Filterkoeffizienten betreffenden Informationen enthalten.

5. Verfahren zur Sprachcodierung nach Anspruch 4, wobei die Schritte des iterativen Berechnens und des Auswählens das Aktualisieren des Verstärkungsfaktors um eine logarithmisch basierende Berechnung enthalten, die ein gewichtetes Mittel der vorher berechneten, mit vorher ausgewählten Vektoren verbundenen Verstärkungen erzeugt, und dann das Multiplizieren jeder der besagten in Frage kommenden Mengen mit dem aktualisierten Verstärkungsfaktor umfassen.

6. Verfahren zur Sprachcodierung nach Anspruch 3 oder Anspruch 5, wobei der Schritt des Verstärkungsaktualisierens die Bereitstellung von Gewichtungsfaktoren für die logarithmisch basierende Berechnung enthält, die eine stabile Verstärkungskennlinie liefern.

7. Verfahren zur Sprachcodierung nach Anspruch 6, wobei der Schritt des Bestimmens einer Menge von Synthesefilterkoeffizienten ihre Konstanthaltung für eine Mehrzahl von zusätzlichen Rahmen enthält, und der Übermittlungsschritt das Übermitteln von Verstärkungsinformationen enthält, die alle aus den Schritten des iterativen Berechnens und des Auswählens verfügbaren Verstärkungsinformationen unterschreiten.

8. Verfahren zur Sprachcodierung nach Anspruch 7, wobei der Übermittlungsschritt das Übermitteln eines Zeichenbits enthält.

9. Verfahren zur Sprachcodierung nach Anspruch 7 oder Anspruch 8, wobei der Übermittlungsschritt das Übermitteln einer Verstärkungsamplitudeneinstellung enthält, die von dem mit der übermittelten Menge von Anregungsinformationen verbundenen Verstärkungsfaktor unterscheidbar ist.

10. Verfahren zur Sprachcodierung nach einem der vorhergehenden Ansprüche, mit Assoziieren jeder der in Frage kommenden Mengen von Anregungsinformationen zur Speicherung in der Tabelle mit einem Index, der wirkungsvoll übermittelt werden kann, und Anordnen der Assoziierung von Indizes zur Begrenzung von Ungenauigkeit bei einem Ein-Bit-Fehler bei der Übermittlung jedes der besagten Indizes.

11. Verfahren zur Sprachcodierung nach Anspruch 3, mit dem zusätzlichen Schritt des iterativen Vor-Auswählens der Mehrzahl von in Frage kommenden Mengen von Anregungsinformationen aus einer größeren Mehrzahl solcher Mengen zur Speicherung in der Tabelle durch

Multiplizieren jeder der größeren Mehrzahl mit jeder einer Anzahl von in Frage kommenden Verstärkungsfaktoren,
Prüfen der Produkte auf Genauigkeit bei der Modellierung einer Menge von Sprachabtastwerten zum Trainieren, und
Reduzieren der größeren Mehrzahl auf die Mehrzahl zur Speicherung in der Tabelle auf Grundlage der Ergebnisse des Prüfungsschrittes.

12. Verfahren zur Sprachcodierung nach einem der Ansprüche 7 bis 9, mit dem zusätzlichen Schritt des iterativen Vor-Auswählens der Mehrzahl von in Frage kommenden Anregungsinformationen aus einer größeren Mehrzahl dieser Mengen zur Speicherung in der Tabelle durch

Multiplizieren jeder der größeren Mehrzahl mit jeder einer Anzahl von in Frage kommenden Verstärkungsfaktoren,
Prüfen der Produkte auf Genauigkeit durch Modellierung einer Menge von Sprachabtastwerten zum Trainieren, und
Reduzieren der größeren Mehrzahl auf die Mehrzahl zur Speicherung in der Tabelle auf Grundlage der Ergebnisse des Prüfungsschrittes.

13. Verfahren zur Sprachcodierung nach einem der vorhergehenden Ansprüche, wobei der Schritt des Bestimmens einer Menge von Filterkoeffizienten das Bestimmen von mindestens zwanzig derselben enthält.

14. Verfahren zur Decodierung von nach einem Verfahren nach einem der vorhergehenden Ansprüche codierter Sprache mit folgenden Schritten:

Initialisieren eines dem Synthesefilter des Codierverfahrens geeignet angepaßten Synthesefilters;
Empfangen eines durch das Codierverfahren erzeugten Signals;
Decodieren des Empfangssignals, um eine Menge von Anregungainformationen zu erhalten;
Zusammenstellen von Rahmen von Ausgabesprache aus einer Kombination des Synthesefilters und der Anregungsinformationen aus dem Decodierschritt, wobei jeder Rahmen eine Mehrzahl von Abtastwerten der Ausgabesprache aufweist;
Bestimmen einer Menge von Synthesefilterkoeffizienten gegebenenfalls als Reaktion auf mindestens einen Rahmen von zusammengestellter Ausgabesprache; und
Berechnen von ein Synthesefilter darstellenden Informationen aus der besagten Menge von Filterkoeffizienten

als Vorbereitung auf den nachfolgenden Teil des Empfangssignals.

**15.** Verfahren zur Übermittlung mit einem Codierverfahren nach einem der Ansprüche 1 bis 13 und einem beliebigen entsprechenden Decodierverfahren, wobei der Schritt des iterativen Berechnens des Codierverfahrens folgendes enthält:

bei einem sich über eine Mehrzahl von Rahmen erstreckenden Wiederholungszyklus, Weglassen von Berechnungen für die Hälfte der in Frage kommenden Mengen von in der Codiertabelle gespeicherten Anregungsinformationen, und der Übermittlungsschritt
Einfügen eines Synchronisationsbits für jedes Auftreten des Weglaßschrittes enthält; und
das Decodierverfahren das Erkennen des Synchronisationsbits enthält.

**16.** Verfahren zur Codierung von Sprache zur Übermittlung zu einem Decodierer zur Wiedergabe nach Anspruch 1, wobei der Schritt des Verstärkungsberechnens das Berechnen des besagten Teils der Informationen, der zur Angabe der angepaßten Verstärkung notwendig ist, mindestens teilweise aus der vorherigen angepaßten Verstärkung, die die ausgewählte Menge von Anregungsinformationen für einen Sprachvektor vor dem aktuellen Sprachvektor multiplizierte, einschließlich des Multiplizierens der besagten vorherigen Verstärkung mit einem Gewichtungsfaktor, der iterationsabhängig ist, enthält; und der Übermittlungsschritt das Übermitteln von mindestens einem Teil von zur Angabe der besagten angepaßten Verstärkung notwendigen Informationen ausschließt.

**17.** Verfahren zur Sprachcodierung nach Anspruch 16, wobei der Schritt des Bestimmens der Menge von Filterkoeffizienten das Bestimmen einer die zwanzigste Ordnung überschreitenden Ordnung derselben enthält.

**18.** Verfahren zur Sprachcodierung nach Anspruch 1, wobei der Schritt des Bestimmens der Menge von Filterkoeffizienten das Bestimmen einer Menge von Filterkoeffizienten für eine Synthese mindestens der zwanzigsten Ordnung aus mindestens einem Sprachvektor enthält, der mindestens einen Teil eines Rahmens simulierter decodierter Sprache darstellt, wobei dieser Vektor vor dem aktuellen Sprachvektor auftrat.

**19.** Verfahren zur Sprachcodierung nach Anspruch 18, wobei der Schritt des Verstärkungsberechnens das Berechnen des besagten Teils der Informationen, der zur Angabe der angepaßten Verstärkung notwendig ist, mindestens teilweise aus der vorherigen angepaßten Verstärkung enthält, die die ausgewählte Menge von Anregungsinformationen für einen Sprachvektor vor dem aktuellen Sprachvektor multiplizierte, einschließlich des Multiplizierens der besagten vorherigen Verstärkung mit einem Gewichtungsfaktor, der iterationsabhängig ist.

## Revendications

**1.** Procédé de codage de signal de parole à communiquer à un décodeur devant le reproduire, comprenant les étapes de

groupement dudit signal de parole en trames de signal de parole ayant chacune une pluralité d'échantillons, chaque trame représentant une partie dudit signal de parole;
formation d'un ensemble cible d'informations liées au signal de parole en réponse à au moins une partie d'une trame de signal de parole qui est la trame en cours du signal de parole;
détermination d'un ensemble de coefficients de filtre de synthèse en réponse à au moins une partie d'une trame de signal de parole;
calcul d'informations représentant un filtre de synthèse à partir dudit ensemble de coefficients de filtre de synthèse;
calcul de manière itérative d'une valeur d'erreur pour chacun d'une pluralité d'ensembles candidats d'informations d'excitation stockés dans une table en réponse aux informations de filtre et chacun desdits ensembles candidats et ledit ensemble cible d'informations liées au signal de parole, comportant
le calcul d'un gain adapté par lequel chaque ensemble candidat est multiplié avant de calculer la valeur d'erreur respective;
la sélection d'un desdits ensembles candidats d'informations d'excitation comme produisant la plus petite valeur d'erreur;
la communication d'informations comportant des informations représentant l'emplacement dans la table de l'ensemble sélectionné parmi lesdits ensembles candidats d'informations d'excitation pour la reproduction dudit signal de parole pour la trame en cours du signal de parole,

CARACTERISE EN CE QUE

l'étape de formation comporte la formation d'un ensemble cible d'informations liées au signal de parole en réponse à une partie de la trame en cours du signal de parole, laquelle portion est le vecteur de parole en cours; l'étape de communication exclut la communication de l'ensemble de coefficients de filtre de synthèse, et l'étape de détermination de l'ensemble de coefficients de filtre de synthèse comporte leur détermination par analyse prédictive linéaire à partir d'un vecteur de parole représentant au moins une partie d'une trame de signal de parole décodé simulé, lequel vecteur s'étant produit antérieurement au vecteur de parole en cours.

**2.** Procédé de codage de signal de parole tel que revendiqué à la revendication 1, dans lequel

l'étape de détermination de l'ensemble de coefficients de filtre comporte la détermination, pour chaque trame après la première trame, que la transmission d'un tel nombre d'entre-eux et à une telle précision pour chaque vecteur de parole de chaque trame serait inappropriée au débit nominal et à la précision requise du codeur.

**3.** Procédé de codage de signal de parole tel que revendiqué à la revendication 1, dans lequel

les étapes de calcul de manière itérative et de sélection comportent la multiplication d'ensembles candidats d'informations d'excitation par un facteur de gain, comportant la mise à jour de manière itérative du facteur de gain par un calcul de base logarithmique qui produit une moyenne pondérée des gains calculés antérieurement associés aux vecteurs sélectionnés antérieurement, ladite étape de mise à jour comportant la mise à jour des facteurs de pondération pour la moyenne pondérée.

**4.** Procédé de codage de signal de parole tel que revendiqué à la revendication 1 ou la revendication 2, dans lequel

ledit filtre de synthèse est un filtre à réponse impulsionnelle finie;

ladite étape de calcul de manière itérative comprend le calcul de manière itérative d'une valeur d'erreur pour chacun d'une pluralité d'ensembles candidats d'informations d'excitation stockés dans une table et sélectionnés dans un ordre basé sur la fréquence d'utilisation dans un codage antérieur de signal de parole, en réponse aux informations de filtre à réponse impulsionnelle finie et chacun desdits ensembles candidats et ledit ensemble cible d'informations d'excitation, comportant la multiplication de chacun desdits ensembles candidats par un facteur de gain, dans lequel un seul ensemble candidat est utilisé dans différentes itérations quand et s'il est multiplié par différents facteurs de gain;

ladite étape de sélection comprend la sélection d'un ensemble candidat d'informations d'excitation et d'un facteur de gain produisant une valeur d'erreur en dessous d'une valeur prédéterminée; et

ladite étape de communication comprend des informations de communication comportant des informations représentant l'emplacement dans la table de l'ensemble sélectionné parmi les ensembles candidats d'informations d'excitation, lesdites informations communiquées ne comportant pas d'information concernant l'ensemble de coefficients de filtre.

**5.** Procédé de codage de signal de parole tel que revendiqué à la revendication 4, dans lequel

les étapes de calcul de manière itérative et de sélection comportent la mise à jour du facteur de gain par un calcul de base logarithmique qui produit une moyenne pondérée des gains calculés antérieurement associés aux vecteurs sélectionnés antérieurement, puis la multiplication de chacun desdits ensembles candidats par le facteur de gain mis à jour.

**6.** Procédé de codage de signal de parole tel que revendiqué à la revendication 3 ou la revendication 5, dans lequel

l'étape de mise à jour du gain comporte la fourniture de facteurs de pondération pour le calcul de base logarithmique qui produit une caractéristique de gain stable.

**7.** Procédé de codage de signal de parole tel que revendiqué à la revendication 6, dans lequel

l'étape de détermination d'un ensemble de coefficients de filtre de synthèse comporte leur maintien à une valeur constante pour une pluralité de trames supplémentaires, et

l'étape de communication comporte la communication d'informations de gain qui sont inférieures à toutes les informations de gain provenant des étapes de calcul de manière itérative et de sélection.

**8.** Procédé de codage de signal de parole tel que revendiqué à la revendication 7, dans lequel l'étape de communication comporte la communication d'un binaire de signe.

**9.** Procédé de codage de signal de parole tel que revendiqué à la revendication 7 ou la revendication 8, dans lequel

l'étape de communication comporte la communication d'un réglage d'amplitude de gain qui est différenciable du facteur de gain associé à l'ensemble communiqué d'informations d'excitation.

**10.** Procédé de codage de signal de parole tel que revendiqué dans l'une quelconque des revendications précédentes, comportant

l'association à chacun des ensembles candidats d'informations d'excitation à stocker dans la table d'un indice qui peut être efficacement communiqué et la disposition de l'association d'indices pour limiter l'imprécision dans le cas d'une erreur sur un binaire dans la communication de chacun desdits indices.

**11.** Procédé de codage de signal de parole tel que revendiqué à la revendication 3, comportant

l'étape supplémentaire de pré-sélection de manière itérative de la pluralité des ensembles candidats d'informations d'excitation parmi une pluralité plus grande de tels ensembles pour les stocker dans la table en

multipliant chacun de la pluralité plus grande par chacun d'un certain nombre de facteurs de gain candidats,

essai de la précision des produits dans la modélisation d'un ensemble d'échantillons de parole d'apprentissage, et

réduction de la pluralité plus grande en la pluralité à stocker dans la table en fonction des résultats de l'étape d'essai.

**12.** Procédé de codage de signal de parole tel que revendiqué dans l'une quelconque des revendications 7 à 9, comportant

l'étape supplémentaire de pré-sélection de manière itérative de la pluralité de candidats d'informations d'excitation parmi une pluralité plus grande de tels ensembles pour les stocker dans la table en

multipliant chacun de la pluralité plus grande par chacun d'un certain nombre de facteurs de gain candidats,

essai de la précision des produits dans la modélisation d'un ensemble d'échantillons de parole d'apprentissage, et

réduction de la pluralité plus grande en la pluralité à stocker dans la table en fonction des résultats de l'étape d'essai.

**13.** Procédé de codage de signal de parole tel que revendiqué dans l'une quelconque des revendications précédentes, dans lequel

l'étape de détermination d'un ensemble de coefficients de filtre comporte la détermination d'au moins vingt d'entre eux.

**14.** Procédé de décodage de signal de parole codé par un procédé tel que revendiqué dans l'une quelconque des revendications précédentes, comprenant les étapes de

initialisation d'un filtre de synthèse convenablement adapté au filtre de synthèse du procédé de codage;

réception d'un signal produit par le procédé de codage;

décodage du signal reçu pour produire un ensemble d'informations d'excitation;

assemblage des trames de signal de parole sorti à partir d'une combinaison du filtre de synthèse et des informations d'excitation provenant de l'étape de décodage, chaque trame ayant une pluralité d'échantillons du signal de parole sorti;

détermination d'un ensemble de coefficients de filtre de synthèse au moment approprié en réponse à au moins une trame du signal de parole sorti assemblé; et

calcul d'informations représentant un filtre de synthèse à partir dudit ensemble de coefficients de filtre en préparation à la partie subséquente du signal reçu.

**15.** Procédé de communication, employant un procédé de codage tel que revendiqué dans l'une quelconque des revendications 1 à 13 et n'importe quel procédé de décodage correspondant, dans lequel

l'étape de calcul de manière itérative du procédé de codage comporte

sur un cycle de répétition s'étendant sur une pluralité de trames, l'omission de calculs pour la moitié des ensembles candidats d'informations d'excitation stockés dans la table de codage et

l'étape de communication comporte

l'insertion d'un binaire de synchronisation pour chaque occurrence de l'étape d'omission; et

le procédé de décodage comporte la détection du binaire de synchronisation.

**16.** Procédé de codage de signal de parole à communiquer à un décodeur devant le reproduire tel que revendiqué à la revendication 1, dans lequel

l'étape de calcul de gain comporte le calcul de ladite partie des informations nécessaires pour spécifier le gain adapté au moins partiellement à partir du gain adapté antérieur qui multipliait l'ensemble sélectionné d'informations d'excitation pour un vecteur de parole antérieur au vecteur de parole en cours, comportant la multiplication dudit gain antérieur par un facteur de pondération qui dépend de l'itération; et

l'étape de communication exclut la communication d'au moins une partie d'informations nécessaires pour spécifier ledit gain adapté.

**17.** Procédé de codage de signal de parole tel que revendiqué à la revendication 16, dans lequel
l'étape de détermination de l'ensemble de coefficients de filtre comporte la détermination d'un ordre de ceux-ci ne dépassant pas le vingtième ordre.

**18.** Procédé de codage de signal de parole tel que revendiqué à la revendication 1, dans lequel l'étape de détermination de l'ensemble de coefficients de filtre comporte la détermination d'un ensemble de coefficients de filtre pour une synthèse au moins du vingtième ordre à partir d'au moins un vecteur de parole représentant au moins une partie d'une trame de signal de parole décodé simulé, lequel vecteur s'étant produit antérieurement au vecteur de parole en cours.

**19.** Procédé de codage de signal de parole tel que revendiqué à la revendication 18, dans lequel
l'étape de calcul de gain comporte le calcul de ladite partie des informations nécessaires pour spécifier le gain adapté au moins partiellement à partir du gain adapté antérieur qui multipliait l'ensemble sélectionné d'informations d'excitation pour un vecteur de parole antérieur au vecteur de parole en cours, comportant la multiplication dudit gain antérieur par un facteur de pondération qui dépend de l'itération.

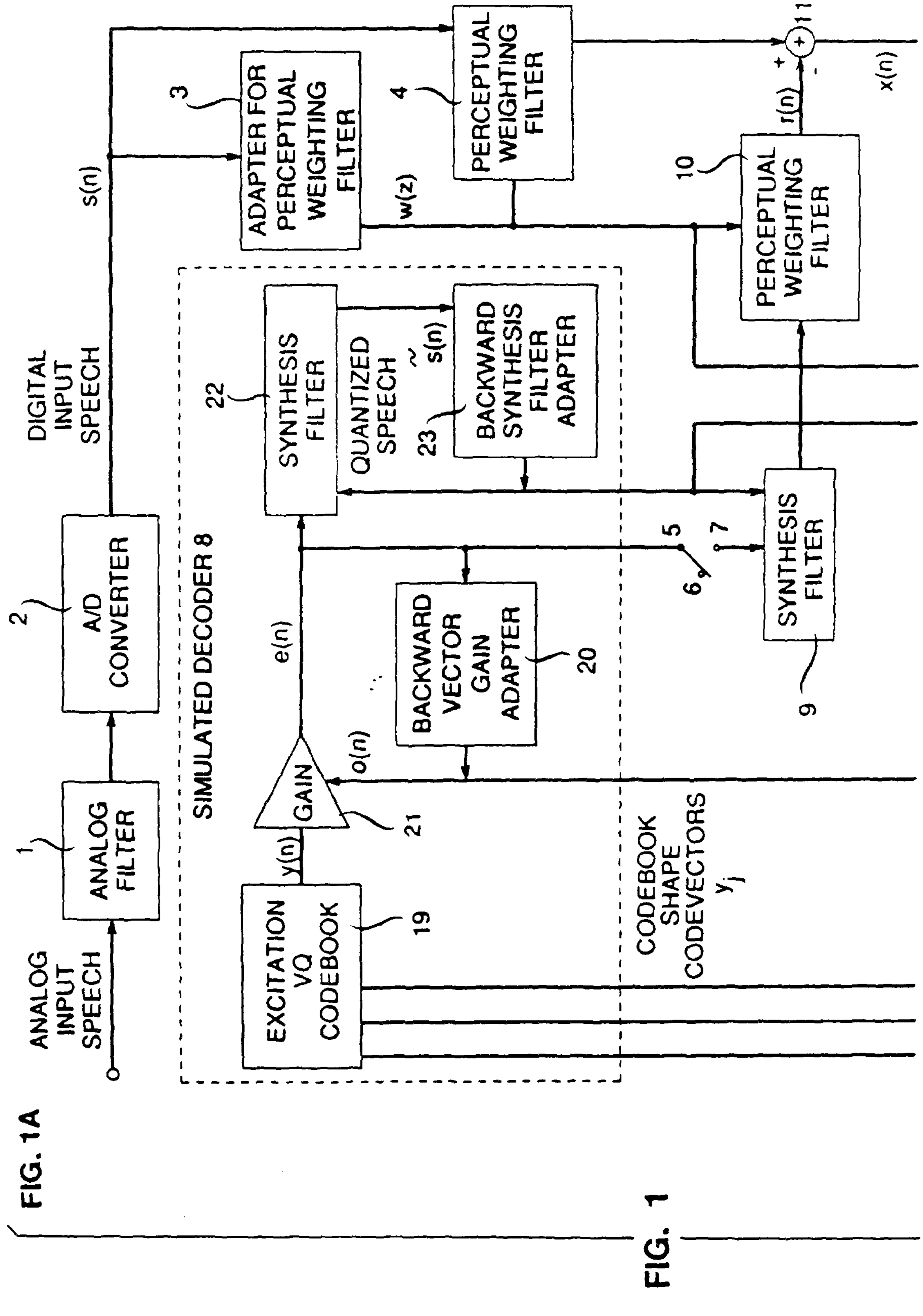
ANALOG INPUT SPEECH
1
ANALOG FILTER
2
A/D CONVERTER
DIGITAL INPUT SPEECH
s(n)
3
ADAPTER FOR PERCEPTUAL WEIGHTING FILTER
w(z)
4
PERCEPTUAL WEIGHTING FILTER
11
+
-
x(n)
r(n)
10
PERCEPTUAL WEIGHTING FILTER
SIMULATED DECODER 8
19
EXCITATION VQ CODEBOOK
y(n)
GAIN
21
σ(n)
e(n)
20
BACKWARD VECTOR GAIN ADAPTER
22
SYNTHESIS FILTER
QUANTIZED SPEECH
s̃(n)
23
BACKWARD SYNTHESIS FILTER ADAPTER
5
6
7
SYNTHESIS FILTER
9
CODEBOOK SHAPE CODEVECTORS
$y_j$

FIG. 1A

FIG. 1

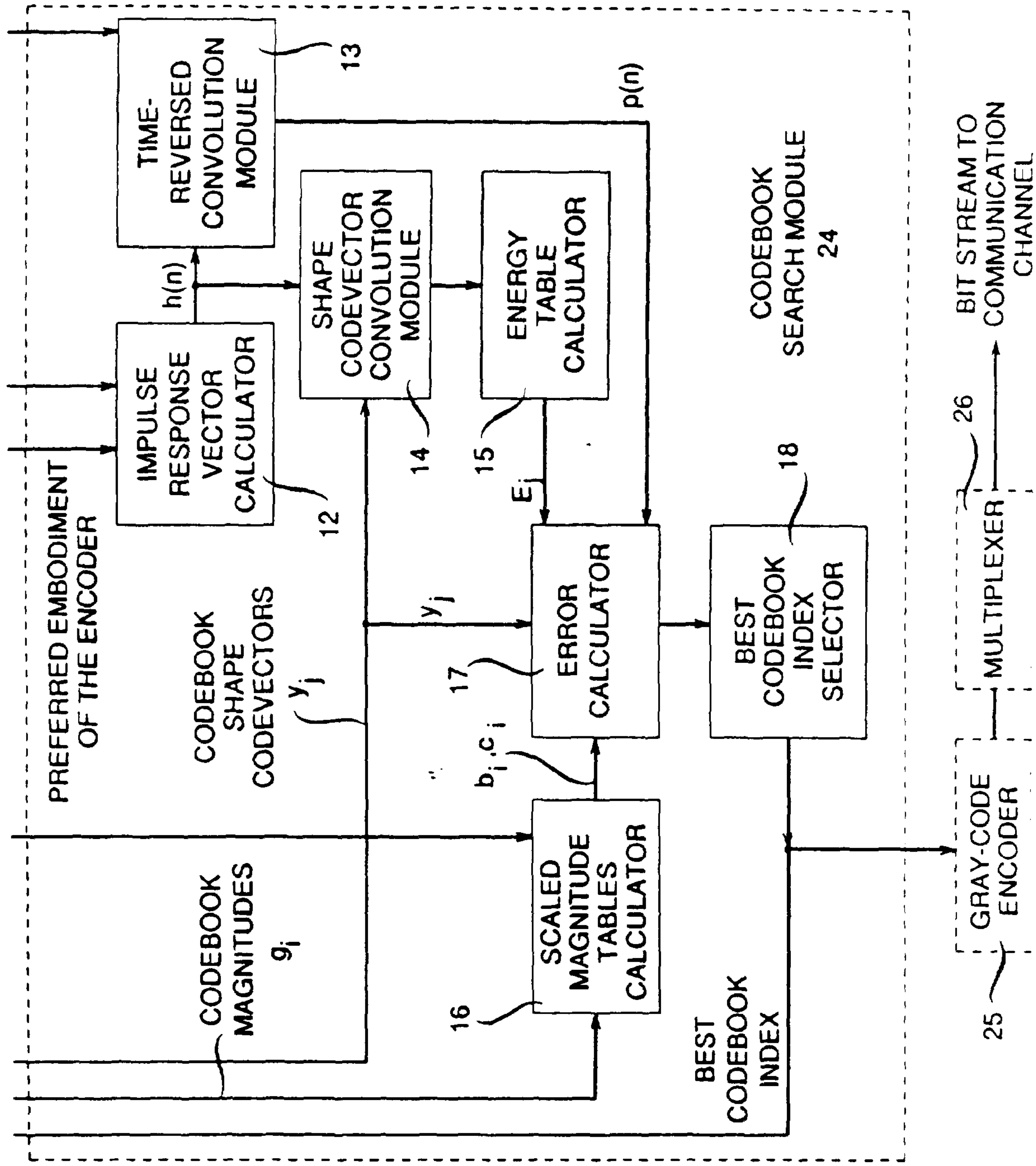
PREFERRED EMBODIMENT OF THE ENCODER
TIME-REVERSED CONVOLUTION MODULE
13
IMPULSE RESPONSE VECTOR CALCULATOR
12
h(n)
SHAPE CODEVECTOR CONVOLUTION MODULE
14
ENERGY TABLE CALCULATOR
15
p(n)
CODEBOOK SEARCH MODULE
24
$E_j$
CODEBOOK SHAPE CODEVECTORS
$y_j$
$y_j$
ERROR CALCULATOR
17
BEST CODEBOOK INDEX SELECTOR
18
$b_i, c_i$
CODEBOOK MAGNITUDES
$g_i$
SCALED MAGNITUDE TABLES CALCULATOR
16
BEST CODEBOOK INDEX
GRAY-CODE ENCODER
25
MULTIPLEXER
26
BIT STREAM TO COMMUNICATION CHANNEL

FIG. 1B

FIG. 1

FIG. 2

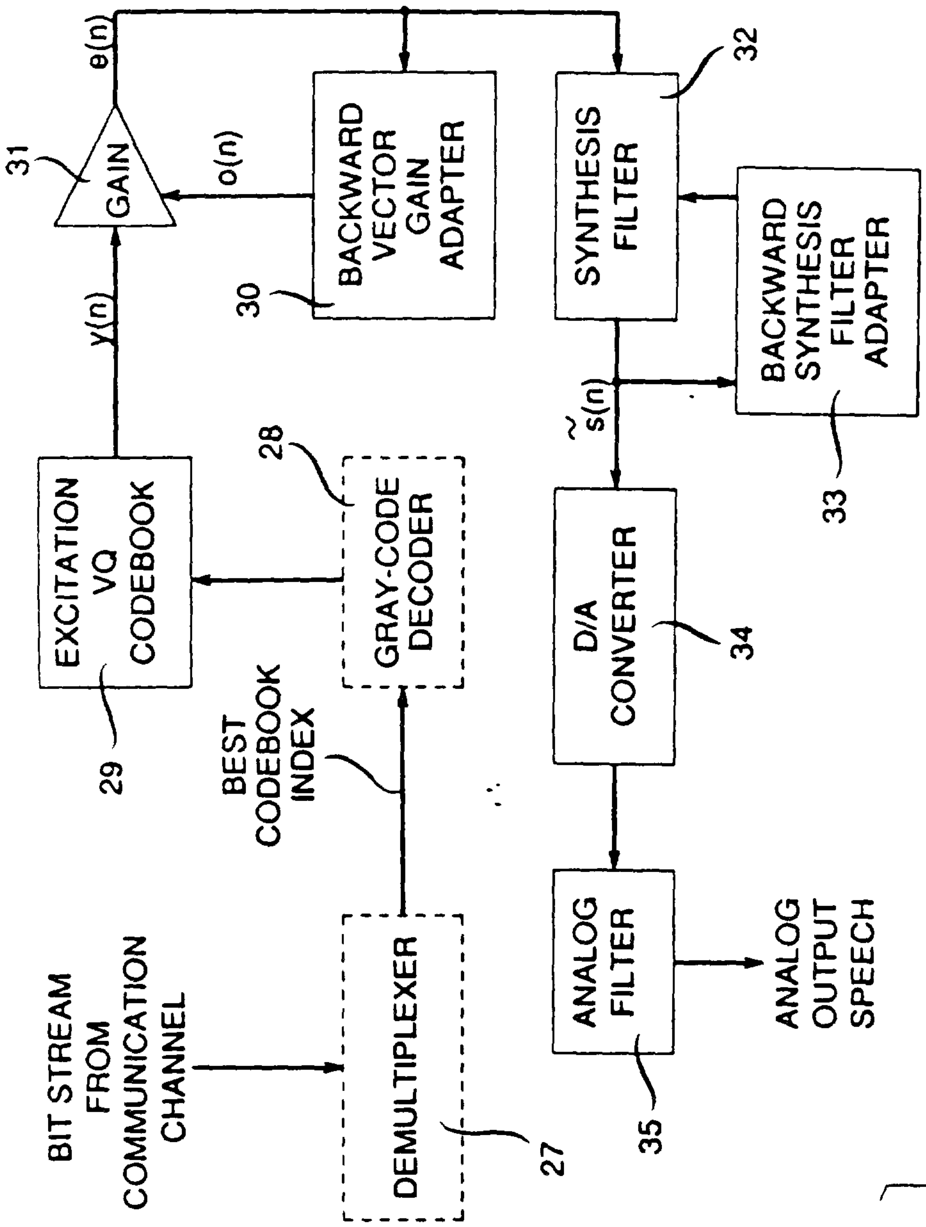
BIT STREAM FROM COMMUNICATION CHANNEL
DEMULTIPLEXER
27
BEST CODEBOOK INDEX
GRAY-CODE DECODER
28
EXCITATION VQ CODEBOOK
29
y(n)
GAIN
31
σ(n)
BACKWARD VECTOR GAIN ADAPTER
30
e(n)
SYNTHESIS FILTER
32
s̃(n)
BACKWARD SYNTHESIS FILTER ADAPTER
33
D/A CONVERTER
34
ANALOG FILTER
35
ANALOG OUTPUT SPEECH

FIG. 9

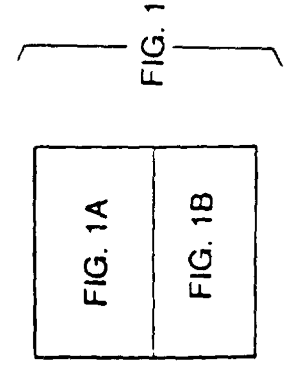
FIG. 1
FIG. 1A
FIG. 1B

FIG. 3

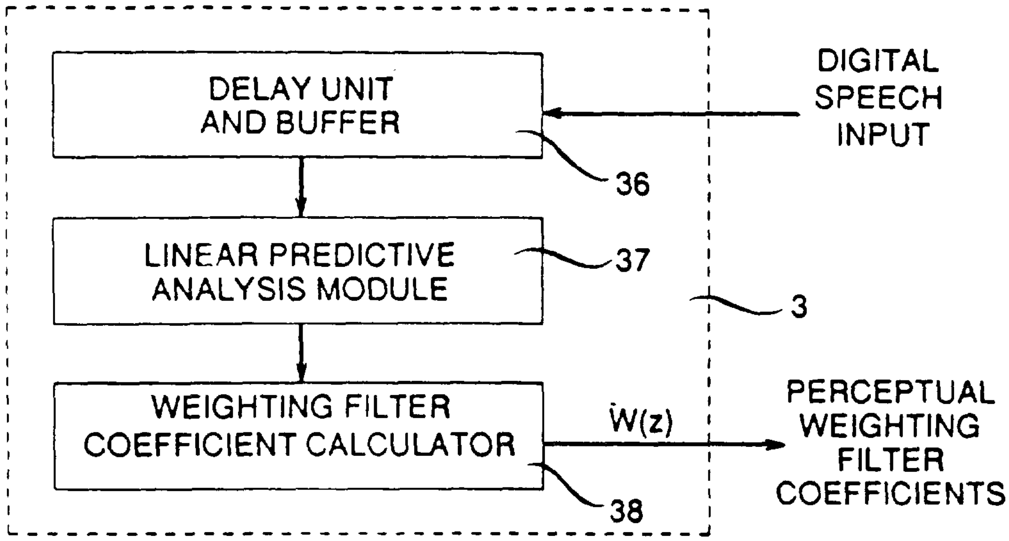
DELAY UNIT
AND BUFFER
DIGITAL
SPEECH
INPUT
36
LINEAR PREDICTIVE
ANALYSIS MODULE
37
3
WEIGHTING FILTER
COEFFICIENT CALCULATOR
W(z)
PERCEPTUAL
WEIGHTING
FILTER
COEFFICIENTS
38

FIG. 5

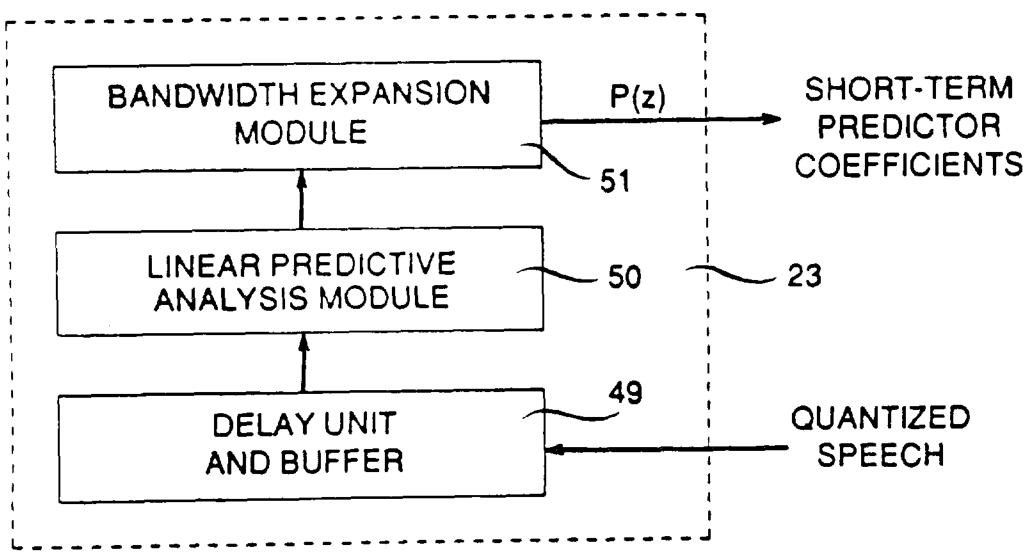
BANDWIDTH EXPANSION
MODULE
P(z)
SHORT-TERM
PREDICTOR
COEFFICIENTS
51
LINEAR PREDICTIVE
ANALYSIS MODULE
50
23
49
DELAY UNIT
AND BUFFER
QUANTIZED
SPEECH

FIG. 4

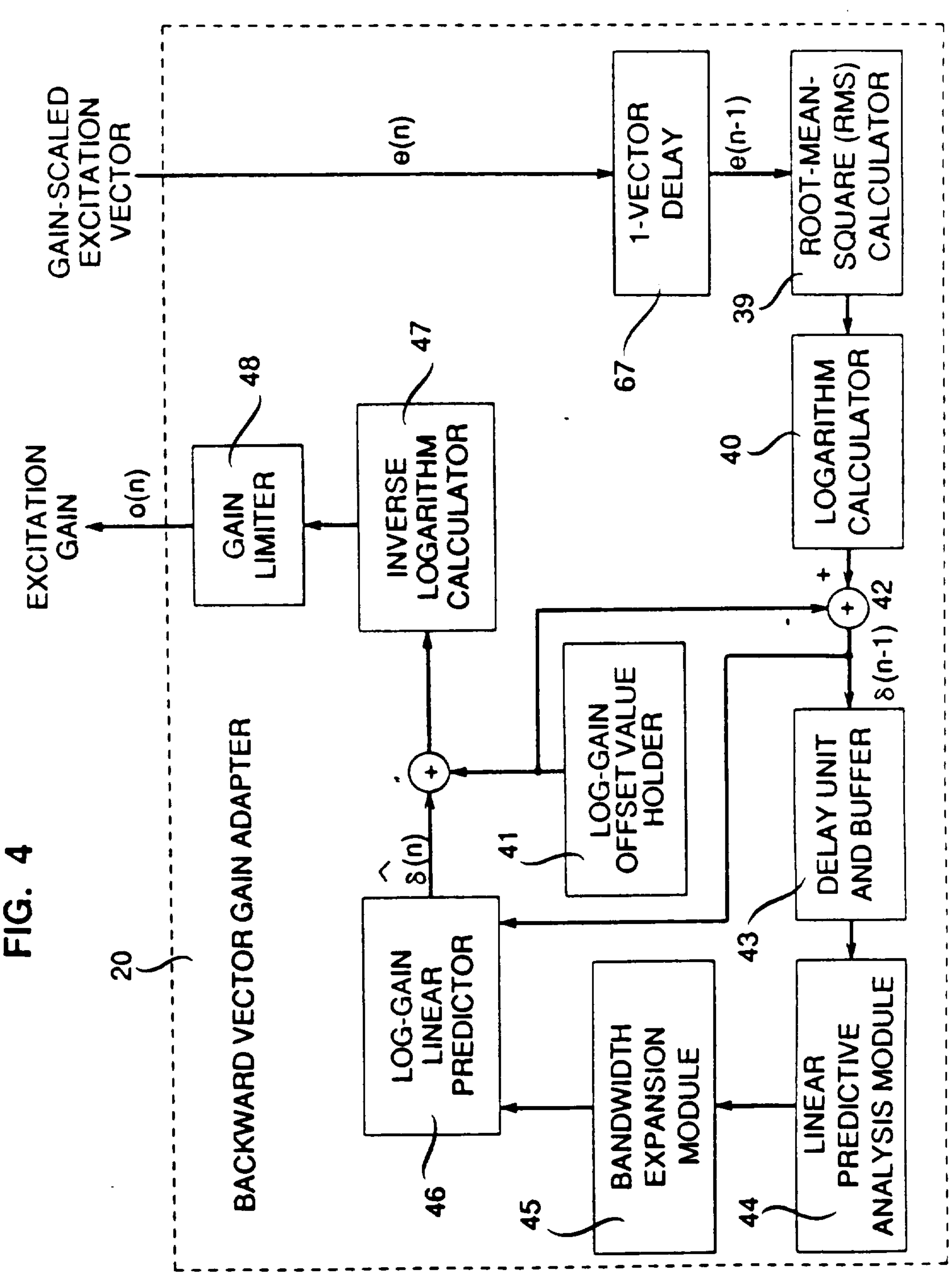
GAIN-SCALED EXCITATION VECTOR
EXCITATION GAIN
σ(n)
e(n)
e(n-1)
20
BACKWARD VECTOR GAIN ADAPTER
GAIN LIMITER
48
INVERSE LOGARITHM CALCULATOR
47
1-VECTOR DELAY
67
ROOT-MEAN-SQUARE (RMS) CALCULATOR
39
LOGARITHM CALCULATOR
40
+
-
42
δ(n-1)
LOG-GAIN OFFSET VALUE HOLDER
41
δ̂(n)
DELAY UNIT AND BUFFER
43
LOG-GAIN LINEAR PREDICTOR
46
BANDWIDTH EXPANSION MODULE
45
LINEAR PREDICTIVE ANALYSIS MODULE
44

FIG. 6

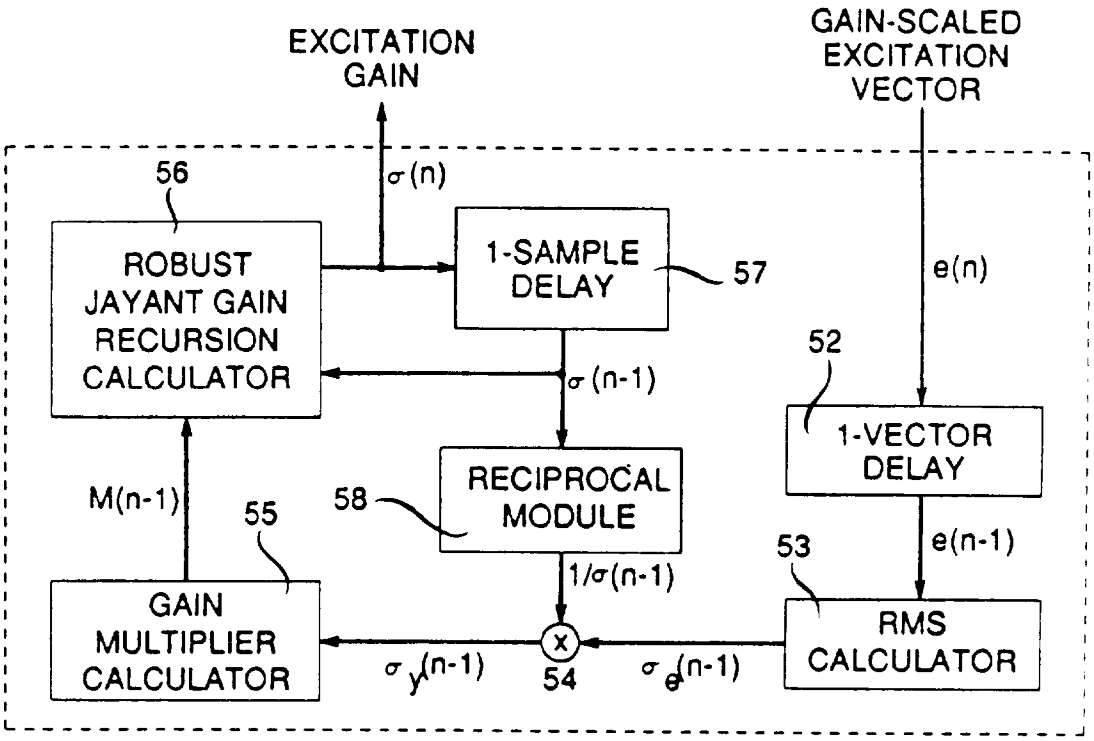
EXCITATION GAIN
GAIN-SCALED EXCITATION VECTOR
56
σ(n)
ROBUST JAYANT GAIN RECURSION CALCULATOR
1-SAMPLE DELAY
57
e(n)
52
σ (n-1)
1-VECTOR DELAY
M(n-1)
55
58
RECIPROCAL MODULE
e(n-1)
53
1/σ(n-1)
GAIN MULTIPLIER CALCULATOR
RMS CALCULATOR
σ y(n-1)
54
σ e(n-1)

FIG. 8

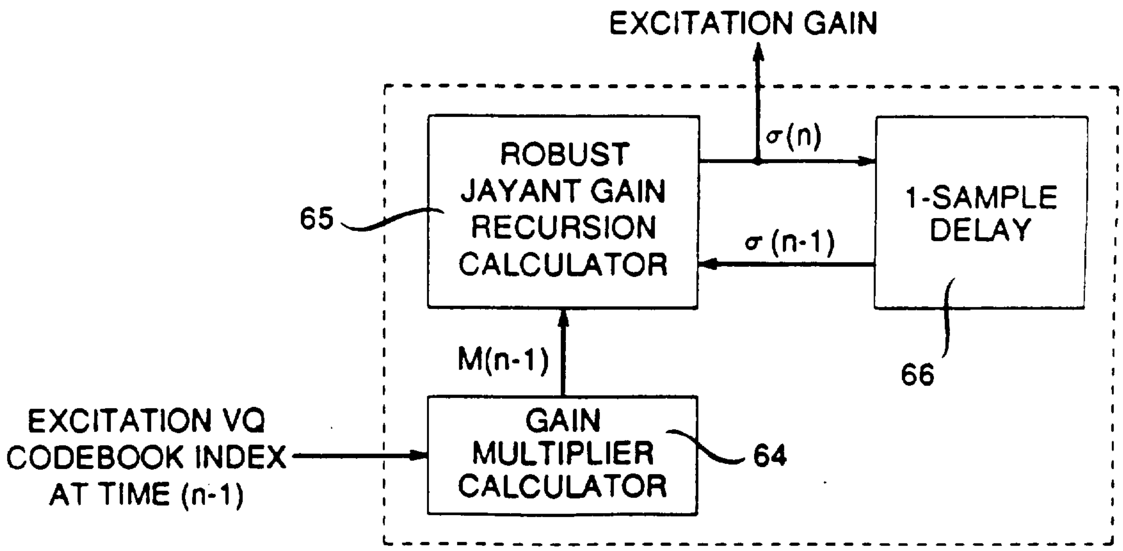
EXCITATION GAIN
σ(n)
ROBUST JAYANT GAIN RECURSION CALCULATOR
65
1-SAMPLE DELAY
σ (n-1)
M(n-1)
66
EXCITATION VQ CODEBOOK INDEX AT TIME (n-1)
GAIN MULTIPLIER CALCULATOR
64

FIG. 7

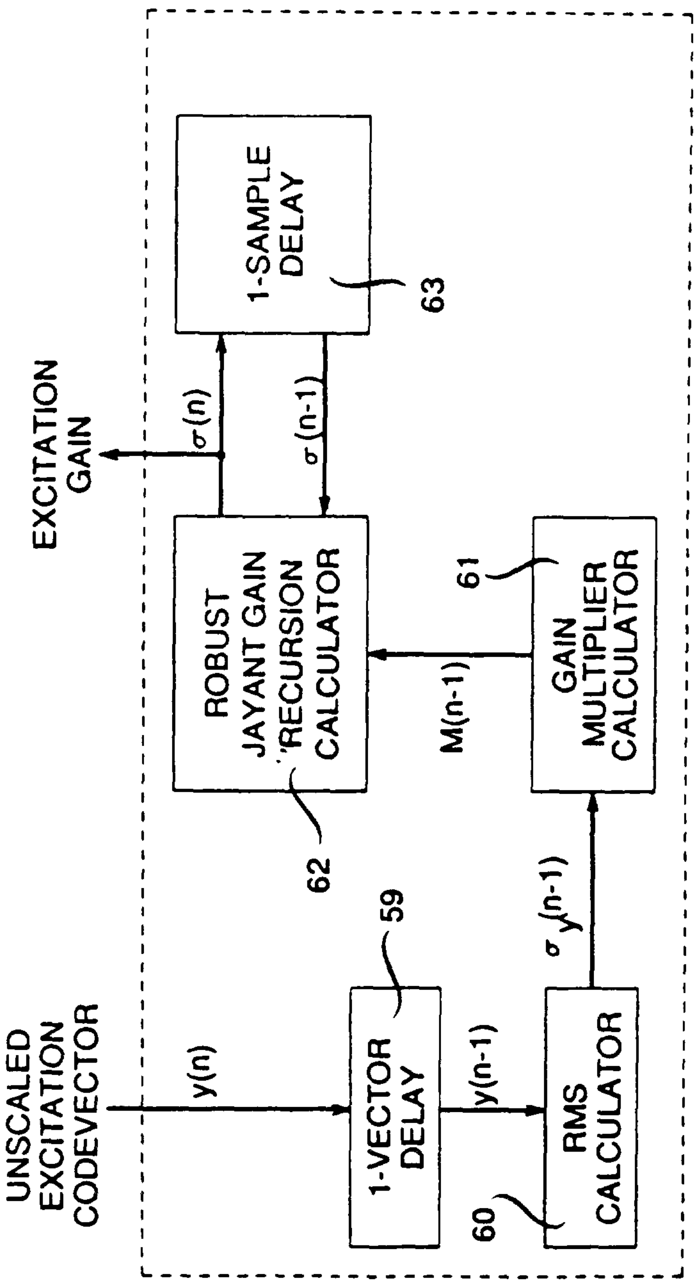
UNSCALED EXCITATION CODEVECTOR
y(n)
1-VECTOR DELAY
59
y(n-1)
RMS CALCULATOR
60
σ y(n-1)
GAIN MULTIPLIER CALCULATOR
61
M(n-1)
ROBUST JAYANT GAIN RECURSION CALCULATOR
62
EXCITATION GAIN
σ(n)
σ(n-1)
1-SAMPLE DELAY
63